# EUROPEAN PATENT APPLICATION

(11) **EP 4 451 212 A2**
(43) Date of publication of application: **23.10.2024**
(21) Application number: 24164418.6
(22) Date of filing: 19.03.2024
(51) Int. Cl.: G06T 7/269

(54) **INFORMATION PROCESSING APPARATUS, INFORMATION PROCESSING METHOD, AND CARRIER MEDIUM**

(30) Priority: 23.03.2023 JP 2023046293; 22.12.2023 JP 2023217303
(71) Applicant: Ricoh Company, Ltd., Tokyo 143-8555 (JP)
(72) Inventor: Nagashima, Kenji, Tokyo, 143-8555 (JP); Okamoto, Toshihiro, Tokyo, 143-8555 (JP); Aoki, Shin, Tokyo, 143-8555 (JP); Kimura, Sukehiro, Tokyo, 143-8555 (JP)
(74) Representative: Marks & Clerk LLP

(57) **Abstract**

An information processing method for acquiring location information of an object to be tracked based on a captured moving image of surroundings of the object, performed by an information processing apparatus, includes acquiring (S21) the location information of the object based on location management information in which identification information of the object, the location information of the object, and time information indicating a time at which the location information of the object is acquired are associated with each other; acquiring (S22) the time information associated with the acquired location information of the object as time information indicating a time before movement of the object starts, based on the location management information; tracking (S23), by image processing, the object in the captured moving image based on the location information of the object; and acquiring (S25) current location information of the object indicating a location of the object at an end of the movement based on a result of the tracking. The object is tracked in a part of the captured moving image starting from a moving image time corresponding to the acquired time information.

## Description

### BACKGROUND

### Technical Field

The present disclosure relates to an information processing apparatus, an information processing method, and a carrier medium.

### Related Art

As known in the related art, an information processing method, a program, and an information processing apparatus for managing objects such as cargoes in a facility such as a warehouse acquire location information of the objects that have been moved by a mobile device such as a forklift, based on images captured by a camera attached to the mobile device.

Also disclosed is a technique for acquiring current location information of an object whose current location is lost as a result of the object having been moved within a facility by a mobile device without a camera. The disclosed technique tracks movement of the object based on the location of the object that is last placed by a mobile device, with a camera and a moving image captured by a camera secured to the ceiling of the facility (see, for example, Japanese Unexamined Patent Application Publication No. 2022-130032).

In the configuration disclosed in Japanese Unexamined Patent Application Publication No. 2022-130032, the movement of an object is tracked using a captured moving image. To track the movement of the object, however, it may be necessary to replay the captured moving image from the beginning not from the point of time when the object is moved. Accordingly, it may take time to acquire current location information of the object whose current location is lost.

### SUMMARY

An object of the present disclosure is to provide an information processing method, a program, and an information processing apparatus for acquiring in a short period of time current location information of an object whose current location is lost.

An embodiment of the present disclosure provides an information processing method for acquiring location information of an object to be tracked based on a captured moving image of surroundings of the object, performed by an information processing apparatus. The information processing method includes acquiring the location information of the object based on location management information in which identification information of the object, the location information of the object, and time information indicating a time at which the location information of the object is acquired are associated with each other; acquiring the time information associated with the acquired location information of the object as time information indicating a time before movement of the object starts, based on the location management information; and tracking, by image processing, the object in the captured moving image based on the location information of the object. The object is tracked in a part of the captured moving image starting from a moving image time corresponding to the acquired time information. The method further includes acquiring current location information of the object indicating a location of the object at an end of the movement based on a result of the tracking.

Another embodiment of the present disclosure provides an information processing method for acquiring location information of an object to be tracked based on a captured moving image of surroundings of the object, performed by an information processing apparatus. The information processing method includes acquiring location information indicating a pre-movement position where the object has been located before movement of the object starts, based on location management information in which identification information of the object, location information of the object, first time information indicating a time before the movement of the object starts, and second time information indicating a time at which the movement of the object ends are associated with each other; acquiring the first time information based on the location management information; and tracking, by image processing, the object in the captured moving image based on the location information of the object. The object is tracked in a part of the captured moving image starting from a moving image time corresponding to the first time information. The method further includes acquiring current location information of the object indicating a location of the object at an end of the movement of the object based on a result of the tracking.

According to another embodiment of the present disclosure, a carrier medium carrying computer readable codes which, when executed by a computer system, cause the computer system to carry out either of the above-described methods.

Another embodiment of the present disclosure provides an information processing apparatus for acquiring location information of an object to be tracked, based on a captured moving image of surroundings of the object. The information processing apparatus includes a movement start position acquisition unit, a time acquisition unit, a tracking unit, and a current location acquisition unit. The movement start position acquisition unit acquires location information indicating a pre-movement position where the object has been located before movement of the object starts, based on location management information in which identification information of the object, the location information of the object, and time information indicating a time at which the location information of the object is acquired are associated with each other. The time acquisition unit acquires time information associated with the acquired location information of the object as time information indicating a time before the movement of the object starts, based on the location management information. The tracking unit tracks, by image processing, the object in the captured moving image based on the location information of the object. The tracking unit tracks the object in a part of the captured moving image starting from a moving image time corresponding to the acquired time information. The current location acquisition unit acquires current location information indicating a location of the object at an end of the movement based on a result of the tracking the object by the tracking unit.

The embodiments of the present disclosure provide an information processing method, a program, and an information processing apparatus for acquiring in a short period of time current location information of an object whose current location is lost.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a view of a warehouse, illustrating an example of location information of objects in the warehouse;
FIG. 2 is a diagram illustrating a general arrangement of an information processing system according to a first embodiment of the present disclosure;
FIG. 3 is a diagram illustrating a configuration of an information processing apparatus according to the first embodiment;
FIG. 4A is a diagram illustrating a functional configuration of the information processing apparatus according to the first embodiment;
FIG. 4B is a table illustrating location management information according to the first embodiment;
FIG. 5 is a flowchart illustrating a process for acquiring location information of an object by the information processing apparatus according to the first embodiment;
FIG. 6 is a flowchart illustrating a process for acquiring current location information of an object by the information processing apparatus according to the first embodiment;
FIGS. 7A and 7B illustrate a first example of acquired object location information, in which FIG. 7A is a view of a location map and FIG. 7B is a table illustrating location information and a time stamp;
FIGS. 8A and 8B illustrate a second example of acquired object location information, in which FIG. 8A is a view of sections and FIG. 8B is a table illustrating location information of the sections and barcodes for the sections;
FIG. 9 is an illustration of an example map screen of the warehouse;
FIG. 10 is an illustration of an example operation screen;
FIG. 11 is an illustration of a designation screen in a first example of a target designation method;
FIG. 12 is a first illustration of a designation result screen in the first example of the target designation method;
FIG. 13 is a second illustration of the designation result screen in the first example of the target designation method;
FIG. 14 is an illustration of an acquisition result screen in the first example of the target designation method;
FIG. 15 is an illustration of a designation screen in a second example of the target designation method;
FIG. 16 is an illustration of a designation result screen in the second example of the target designation method;
FIG. 17 is an illustration of a designation screen in a third example of the target designation method;
FIG. 18A is a diagram illustrating a functional configuration of an information processing apparatus according to a second embodiment of the present disclosure;
FIG. 18B is a table illustrating location management information according to the second embodiment;
FIG. 19 is a flowchart illustrating a process for acquiring current location information of an object by the information processing apparatus according to the second embodiment;
FIG. 20 is an illustration of how an object is moved by a manual pallet jack according to the second embodiment;
FIG. 21 is a first illustration of how the object is moved according to the second embodiment;
FIG. 22 is a second illustration of how the object is moved according to the second embodiment;
FIG. 23 is a diagram illustrating a functional configuration of an information processing apparatus according to a third embodiment of the present disclosure;
FIG. 24 is a flowchart illustrating a process for acquiring current location information of an object by the information processing apparatus according to the third embodiment;
FIG. 25 is a block diagram of an information processing system according to a first example of a fourth embodiment of the present disclosure;
FIG. 26 is a block diagram of an information processing system according to a second example of the fourth embodiment;
FIG. 27 is a block diagram of an information processing system according to a third example of the fourth embodiment;
FIG. 28 is a block diagram of an information processing system according to a fourth example of the fourth embodiment;
FIG. 29 is a block diagram illustrating a hardware configuration of a spherical image capturing device according to an embodiment of the present disclosure;
FIG. 30 is an illustration of a first example of a method for acquiring a relative position between a spherical camera and an object; and
FIGS. 31A and 31B illustrate a second example of the method for acquiring a relative position between a spherical camera and an object, in which FIG. 31A is a side view of a forklift and FIG. 31B is a view of an auxiliary marker supported by the forklift, as viewed from the spherical camera.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

The accompanying drawings are intended to depict embodiments of the present disclosure and should not be interpreted to limit the scope thereof. The accompanying drawings are not to be considered as drawn to scale unless explicitly noted. Also, identical or like reference numerals designate identical or similar components throughout the several views.
Embodiments of the present disclosure will be described hereinafter with reference to the drawings. In the drawings, substantially the same elements are denoted by the same reference numerals, and redundant descriptions thereof will be omitted.

An information processing system according to an embodiment of the present disclosure is a system for acquiring location information of an object to be tracked, based on a moving image captured by an image capturing device that captures an image of the surroundings of the object. The object is moved by a mobile device in a warehouse. Examples of the mobile device include a forklift and a manual pallet jack. The forklift is an object transporting vehicle including a drive unit. The manual pallet jack is an easy-to-operate object transporting device that does not include a drive unit. A person pushes or pulls the manual pallet jack to move the manual pallet jack. The manual pallet jack may be referred to as a manual pallet truck. The object is handled in the warehouse. Examples of the object include a pallet and a cargo.

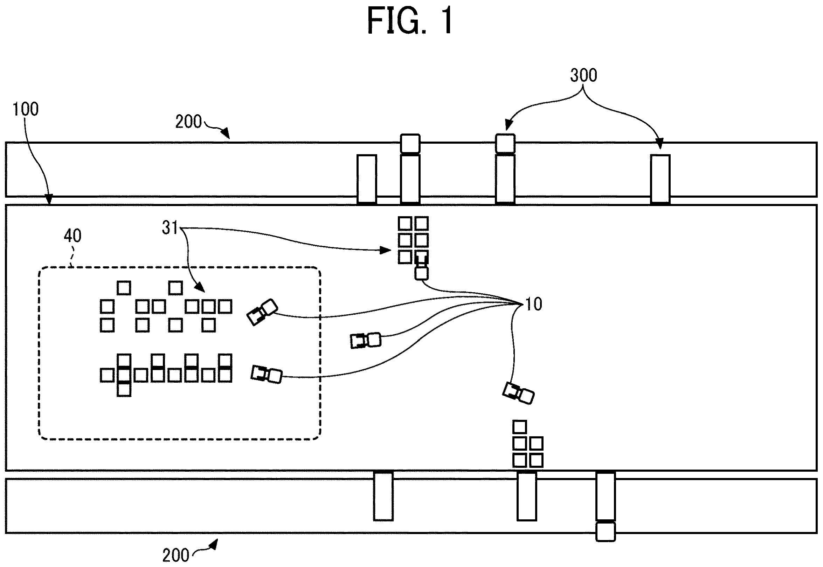

FIG. 1 illustrates an example of location information of objects in a warehouse 100. In FIG. 1, the inside of the warehouse 100 and an area around the warehouse 100 are viewed from above (from the roof of the warehouse 100). The warehouse 100 is a terminal warehouse, or a warehouse located at a hub connecting different modes of transportation. The warehouse 100 is a type of warehouse called a cross-docking warehouse among terminal warehouses. In a cross-docking warehouse, multiple pallets for each product are received from, for example, a factory or a wholesale company and temporarily stored in the warehouse. After that, multiple types of pallets are consolidated based on the destination for delivery, with the pallets remaining intact, and are delivered to multiple retail stores in each area.

In FIG. 1, truck yards 200 are located around the warehouse 100. In the truck yards 200, containers 300 and loading platforms of trucks are placed. The containers 300 are carried by trailers and are separated from each other. In one embodiment, a forklift 10 unloads pallets 31 from a loading platform of a truck that has arrived at one of the truck yards 200 or one of the containers 300 that have carried by the trailers and have arrived at the truck yards 200.

After having unloaded the pallets 31, the forklift 10 carries the pallets 31 to a temporary storage location 40 and temporarily stores the pallets 31 in the temporary storage location 40. At the time of shipment, the forklift 10 carries the pallets 31 to a place in the warehouse 100 near one of the truck yards 200 and aligns the pallets 31. Then, the forklift 10 loads the pallets 31 onto a loading platform of a truck or one of the containers 300.

In the temporary storage location 40, sections are not usually defined for respective products to flexibly allocate space to handle variations of types and quantities of products entering and leaving the temporary storage location 40 from day to day. On the other hand, since multiple workers temporarily store the pallets 31 in any locations, a desired one of the temporarily stored pallets 31 is searched for at the time of shipment. In one embodiment, an information processing system for efficient search does not fixedly determine the temporary storage location 40 for the pallets 31 to make efficient use of the space in the warehouse 100. In addition, the information processing system tracks the locations of the pallets 31 in the warehouse 100 and visualizes the tracked locations of the pallets 31. Such an information processing system includes an information processing apparatus according to an embodiment. The information processing apparatus according to the embodiment acquires location information of an object to be moved by a forklift and tracks the location of the object. An information processing system including the information processing apparatus according to the embodiment will be described in detail hereinafter. As used herein, the term "image" is used to include at least one of a still image and a moving image. The moving image may also be referred to as "video".

### First Embodiment

### Example General Arrangement of Information Processing System 1

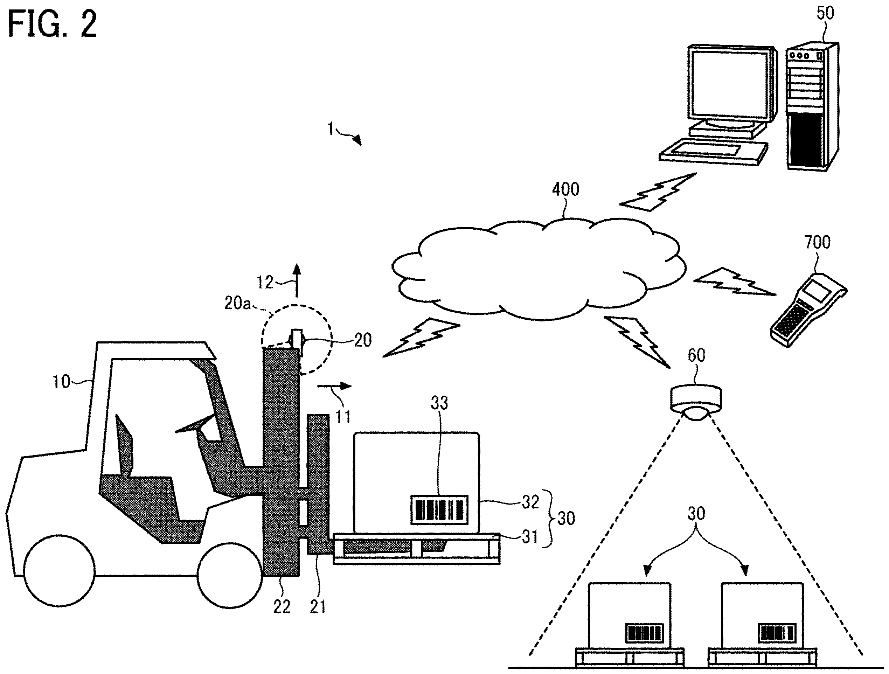

FIG. 2 illustrates a general arrangement of an information processing system 1 according to a first embodiment. As illustrated in FIG. 2, the information processing system 1 includes a forklift 10, a spherical camera 20, an information processing apparatus 50, a stationary camera 60, and a reader 700. The components of the information processing system 1, described above, are communicably connected to each other via a network 400 such as a local area network (LAN) or the Internet. Apparatuses or devices other than those described above, such as an external server or an image forming apparatus, may be communicably connected to the network 400.

The forklift 10 is a mobile device that conveys a pallet 31 and a cargo 32 while holding the cargo 32 in position on the pallet 31. The pallet 31 and the cargo 32 are included in an object 30. The forklift 10 may include one or more forklifts. The pallet 31 may include one or more pallets. The cargo 32 may include one or more cargoes. In one embodiment, the forklift 10 may be driven by a worker to carry the object 30. In another embodiment, the forklift 10 may be driven automatically without workers to carry the object 30.

The spherical camera 20 is an image capturing device mounted on the forklift 10. The spherical camera 20 captures an image of a 360-degree omnidirectional view around the spherical camera 20. In FIG. 2, an orientation 20a indicates a range that the spherical camera 20 can cover. The image capturing device mounted on the forklift 10 is not limited to the spherical camera 20 and may be any device configured to capture an image of the surroundings of the forklift 10. In some embodiments, the captured image is not a spherical image.

The spherical image includes a captured image of views in a conveyance direction 11 of the object 30 as viewed from the forklift 10 and in a vertically upward direction 12 as viewed from the forklift 10. The conveyance direction 11 corresponds to a direction in front of the forklift 10. The vertically upward direction 12 corresponds to a direction above the forklift 10. In one embodiment, the spherical camera 20 captures an image including a scene in front of the forklift 10 and a scene above the forklift 10.

The spherical camera 20 is preferably mounted on the roof of the forklift 10 or on a support member 22 that supports the forklift 21. The spherical camera 20 mounted in the manner described above can ensure a field of view suitable to capture an image of scenes in front of and above the forklift 10 with a few obstacles in the field of view. In one embodiment, the spherical camera 20 has a wireless communication function to transmit a spherical image to the information processing apparatus 50 via the network 400.

The stationary camera 60 is mounted, for example, on the ceiling of the warehouse 100 to capture an image of the inside of the warehouse 100 from the ceiling toward the floor. In one embodiment, the stationary camera 60 has a wireless communication function to transmit a captured moving image to the information processing apparatus 50 via the network 400.

The stationary camera 60 is preferably a camera that captures an image covering a wide range, and more preferably a hemispherical camera (fish-eye camera) having an angle of view of about 180 degrees. One or a plurality of stationary cameras 60 may be installed. In an example presented herein, a plurality of stationary cameras 60 are provided. The stationary camera 60 includes a plurality of stationary cameras. The relative positions of the plurality of stationary cameras 60 with each other are determined in advance.

In the present embodiment, the stationary cameras 60 are switched from a predetermined one of the stationary cameras 60 to another stationary camera 60 to capture a moving image such that the captured moving image includes the object 30 when at least one of the forklift 10 and the object 30 moved by the forklift 10 falls outside the imaging range of the predetermined stationary camera 60 after the movement. The switching from one of the stationary cameras 60 to another to capture a moving image refers to switching of a captured moving image to be stored in the information processing apparatus 50 among moving images captured by the stationary cameras 60. Each of the stationary cameras 60 starts an image capturing operation in response to a worker or administrator (a system administrator or a manager of the warehouse 100) performing an image capturing start operation such as turning on the power, and ends the image capturing operation in response to the worker or the administrator performing an image capturing end operation such as turning off the power.

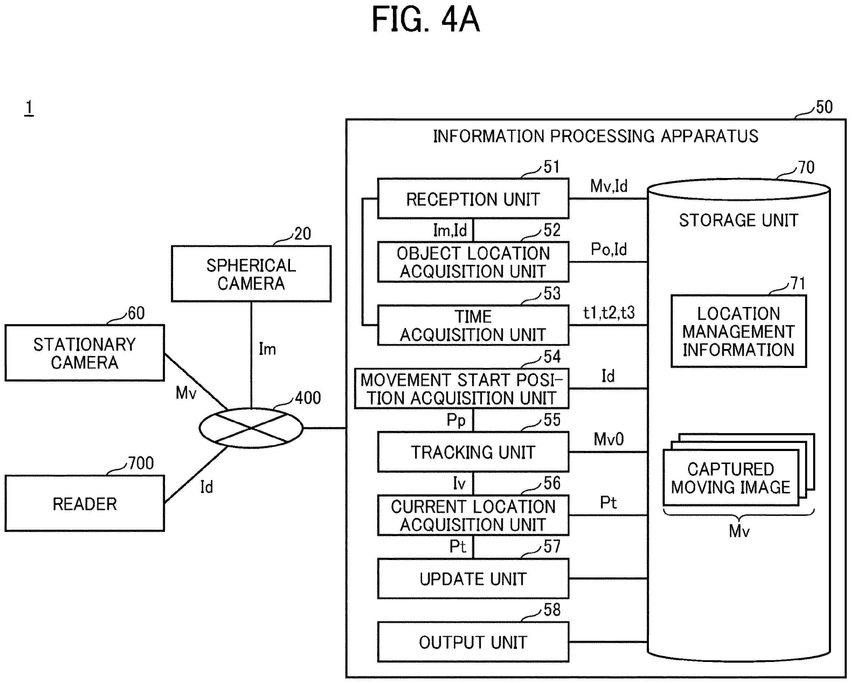

The reader 700 is a device that reads identification information Id (see FIG. 4A) for identifying the object 30. In one embodiment, the reader 700 reads a code 33 indicating the identification information Id, attached to either the cargo 32 or the pallet 31. Examples of the code 33 include a barcode and a quick response code or QR code^{®}. The identification information Id may be obtained by converting the code 33 into another information format such as a text character or may be the code 33 itself.

Examples of the reader 700 include a barcode reader for reading a barcode, and a QR code reader for reading a QR code^{®}. In one embodiment, the reader 700 transmits the read identification information Id of the object 30 to the information processing apparatus 50 via the network 400. The identification information Id is not limited to information read by the reader 700 and may be, for example, information input by the administrator using an operation input unit such as a keyboard.

The information processing apparatus 50 receives a spherical image captured by the spherical camera 20 via the network 400. The information processing apparatus 50 further receives the identification information Id of the object 30 read by the reader 700 via the network 400. In one embodiment, the information processing apparatus 50 acquires location information of the object 30 held by the forklift 10, based on the received spherical image, and manages the location information of the object 30 and the identification information Id of the object 30 in association with each other.

For example, if the object 30 is moved by a device without the spherical camera 20, such as a manual pallet jack, tracking of the location of the object 30 using an image captured by the spherical camera 20 may fail. As a result, the current location of the object 30 may be lost. If the current location of the object 30 is lost, it may be difficult to accurately manage the location of the object 30. The information processing apparatus 50 according to the present embodiment uses a moving image captured by a stationary camera 60 to acquire information on the current location (hereinafter referred to as "current location information") of the object 30 if the object 30 is moved by, for example, a manual pallet jack and the current location thereof is lost, thereby accurately managing the location of the object 30.

In the present embodiment, furthermore, the information processing apparatus 50 acquires location information of the object 30 based on respective moving images captured by a plurality of stationary cameras 60 whose relative positions with each other are determined in advance.

### Example Hardware Configuration of Information Processing Apparatus 50

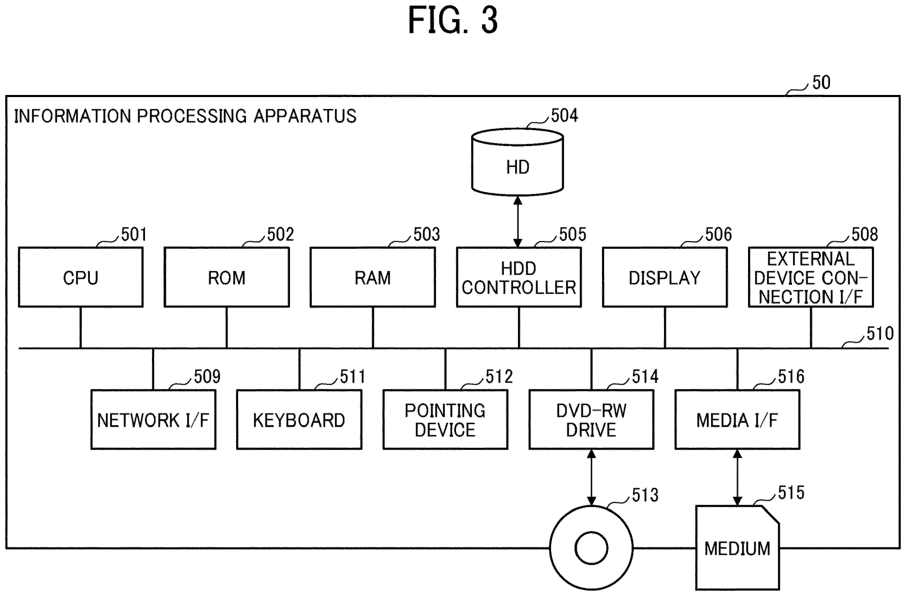

FIG. 3 is a block diagram illustrating an example hardware configuration of the information processing apparatus 50. The information processing apparatus 50 is implemented by a computer, for example.

As illustrated in FIG. 3, the information processing apparatus 50 includes a central processing unit (CPU) 501, a read-only memory (ROM) 502, a random-access memory (RAM) 503, and a hard disk (HD) 504. The information processing apparatus 50 further includes a hard disk drive (HDD) controller 505, a display 506, an external device connection interface (I/F) 508, and a network I/F 509. The information processing apparatus 50 further includes a data bus 510, a keyboard 511, a pointing device 512, a digital versatile disc rewritable (DVD-RW) drive 514, and a media I/F 516. The CPU 501 controls the overall operation of the information processing apparatus 50. The ROM 502 stores a program such as an initial program loader (IPL) to boot the CPU 501. The RAM 503 is used as a work area for the CPU 501.

The HD 504 stores various types of data such as a program. The HDD controller 505 controls the reading or writing of various types of data from or to the HD 504 under control of the CPU 501. The display 506 displays various types of information such as a cursor, a menu, a window, text, or an image.

The external device connection I/F 508 is an interface for connecting the information processing apparatus 50 to various external devices. Examples of the external devices include, but are not limited to, a universal serial bus (USB) memory and a printer. The network I/F 509 is an interface for performing data communication using the network 400. The data bus 510 is, for example, an address bus or a data bus for electrically connecting the components, such as the CPU 501, illustrated in FIG. 3 to each other.

The keyboard 511 is an example of an input means including a plurality of keys for inputting characters, numerical values, various instructions, and the like. The pointing device 512 is an example of an input means to be used for, for example, selecting or executing various instructions, selecting a target for processing, or moving a cursor being displayed. The DVD-RW drive 514 controls the reading or writing of various types of data to or from a DVD-RW 513, which is an example of a removable recording medium. The removable recording medium is not limited to a DVD-RW and may be, for example, a digital versatile disc recordable (DVD-R). The media I/F 516 controls the reading or writing (storing) of data from or to a medium 515 such as a flash memory.

### Example Functional Configuration of Information Processing Apparatus 50

FIG. 4A is a block diagram illustrating a functional configuration of the information processing apparatus 50 according to the present embodiment. The information processing apparatus 50 includes a reception unit 51, a storage unit 70, an object location acquisition unit 52, a time acquisition unit 53, a movement start position acquisition unit 54, a tracking unit 55, a current location acquisition unit 56, an update unit 57, and an output unit 58. Each of these units is a function or means implemented by or caused to function by one or more of the hardware elements illustrated in FIG. 3 operating in accordance with instructions from the CPU 501 according to a program loaded onto the RAM 503 from the HD 504.

In one example, some of the functions illustrated in FIG. 4A may be implemented by an external apparatus other than the information processing apparatus 50. In another example, some of the functions illustrated in FIG. 4A may be implemented by the information processing apparatus 50 and an external apparatus other than the information processing apparatus 50 performing distributed processing. The external apparatus may be an apparatus connected to the information processing apparatus 50 via the network 400. Examples of such an apparatus include a personal computer (PC) other than the information processing apparatus 50, and an external server.

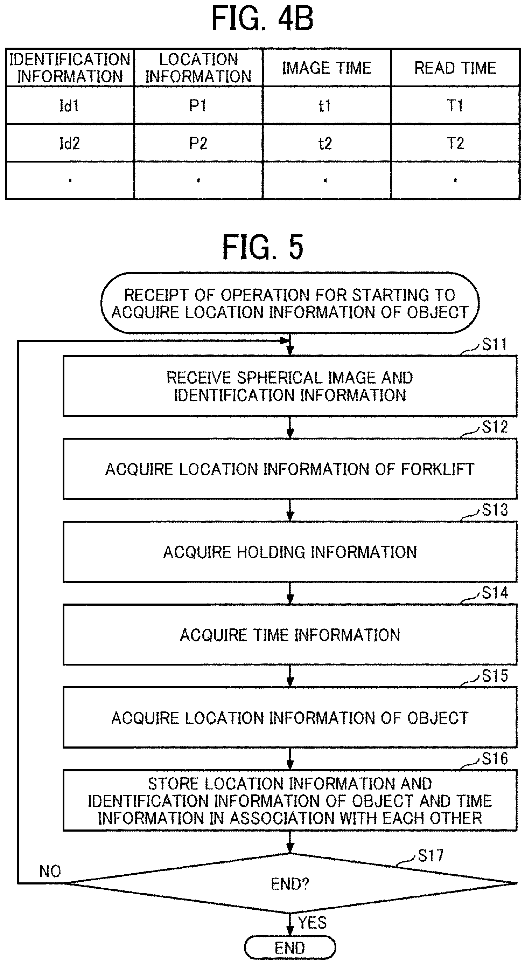

The storage unit 70 stores location management information 71 and a captured moving image Mv. The captured moving image Mv includes a plurality of captured moving images captured by a plurality of stationary cameras 60. The function of the storage unit 70 is implemented by, for example, the HD 504 illustrated in FIG. 3. FIG. 4B illustrates an example of the location management information 71.

The location management information 71 according to the first embodiment corresponds to a table in which the identification information Id of the object 30, location information of the object 30, and time information indicating the time at which the location information of the object 30 is acquired are associated with each other. In an example presented herein, the location management information 71 stores location information Po of the object 30, an image time t1 (time at which the location information Po of the object 30 is acquired), the identification information Id of the object 30, and a read time t3 in association with each other. The image time t1 is the time at which a spherical image Im is received by the reception unit 51. The read time t3 is the time at which the identification information Id is received by the reception unit 51. As used herein, including the claims, the term "time" is used to include information on a date and a time.

The captured moving image Mv is input via the reception unit 51. The captured moving image Mv includes a moving image time t2. The moving image time t2 is the time at which each frame in the captured moving image Mv is obtained. In one embodiment, the storage unit 70 is not included in the information processing apparatus 50, but may be included in an external apparatus. Examples of the external apparatus include a PC other than the information processing apparatus 50, an external server, and an external storage server.

The reception unit 51 receives the spherical image Im captured by the spherical camera 20, the captured moving image Mv obtained by the stationary camera 60, and the identification information Id read by the reader 700 via the network 400. The reception unit 51 outputs the captured moving image Mv and the identification information Id to the storage unit 70 to store the captured moving image Mv and the identification information Id in the storage unit 70. The reception unit 51 further outputs the spherical image Im and the identification information Id to the object location acquisition unit 52.

The object location acquisition unit 52 acquires the location information Po of the object 30 in the warehouse 100 by computation, based on the spherical image Im input via the reception unit 51. For example, the object location acquisition unit 52 acquires location information of the forklift 10 by computation, based on a scene in the warehouse 100 included in the spherical image Im and predetermined location information of the scene in the warehouse 100. In one embodiment, the object location acquisition unit 52 acquires the location information Po of the object 30 in the warehouse 100, based on the location of the forklift 10 in the warehouse 100 and a predetermined relative position of the object 30 held by the forklift 10 with respect to the forklift 10. The object location acquisition unit 52 stores the location information Po of the object 30 and the identification information Id of the object 30 in the storage unit 70 in association with each other. The object location acquisition unit 52 may acquire the location information Po of the object 30 by using holding information indicating whether each of a plurality of forklifts 10 is holding the object 30.

The time acquisition unit 53 refers to the location management information 71 and acquires pre-movement time information indicating a time before the movement of the object 30 starts, based on the identification information Id of the object 30. The time acquisition unit 53 acquires information related to the image time t1, the moving image time t2, and the read time t3 described above and outputs the acquired information to the storage unit 70. The time acquisition unit 53 causes the storage unit 70 to store the location information Po and the image time t1 in association with each other, the captured moving image Mv and the moving image time t2 in association with each other, and the identification information Id and the read time t3 in association with each other.

The movement start position acquisition unit 54 refers to the location management information 71 and acquires the location information Po of the object 30 before the movement of the object 30 starts, based on the identification information Id of the object 30. Movement start position information Pp indicates a position of the object 30 before the movement of the object 30 starts. In other words, the movement start position information Pp is the location information indicating a pre-movement position where the object 30 has been located before movement of the object 30 starts. In a case where the object 30 is moved by a manual pallet jack, the location information Po of the object 30 immediately before the movement of the object 30 with the manual pallet jack starts is stored in the location management information 71 in association with the identification information Id of the object 30. Accordingly, in one example, the movement start position acquisition unit 54 refers to the location management information 71 based on the identification information Id of the object 30 and acquires the movement start position information Pp. The movement start position acquisition unit 54 outputs the movement start position information Pp to the tracking unit 55.

The tracking unit 55 tracks, by image processing, the object 30 in a part of the captured moving image Mv starting from the moving image time t2 corresponding to the time information (a partial moving image in the captured moving image Mv) based on the location information of the object 30. More specifically, the tracking unit 55 acquires the moving image time t2 corresponding to the movement start position information Pp from the movement start position acquisition unit 54. While reproducing part of the captured moving image Mv, namely, reproducing a moving image Mv0 that starts from the moving image time t2, the tracking unit 55 tracks the location of the object 30, by image processing, based on each frame of the moving image Mv0. At the end of the movement of the object 30, the tracking unit 55 outputs an end image Iv to the current location acquisition unit 56 as a tracking result. The end image Iv is a frame at the end of the movement of the object 30. For example, the tracking unit 55 may determine that the movement of the object 30 ends when the scene included in the moving image Mv0 remains unchanged for a period of time greater than or equal to a threshold time. The image processing for tracking by the tracking unit 55 may be implemented by using an optical flow algorithm, for example.

The current location acquisition unit 56 acquires current location information Pt of the object 30 at the end of the movement of the object 30, based on the tracking result of the object 30 obtained by the tracking unit 55. For example, the current location acquisition unit 56 may acquire the current location information Pt of the object 30, based on the end image Iv serving as a tracking result obtained by the tracking unit 55. The current location acquisition unit 56 outputs the acquired current location information Pt to the update unit 57. The information processing apparatus 50 sets the current location information Pt of the object 30, which is acquired by the current location acquisition unit 56, as location information of the object 30 obtained before the movement of the object 30 starts.

The update unit 57 updates the location management information 71, based on the current location information Pt of the object 30 received from the current location acquisition unit 56. More specifically, the update unit 57 replaces the location information Po of the object 30, which is stored in the location management information 71 and becomes incorrect as a result of the object 30 having been moved by the manual pallet jack, with the current location information Pt. As a result, the update unit 57 updates the location management information 71.

In one embodiment, the output unit 58 outputs information stored in the storage unit 70 to the outside. The information to be output from the output unit 58 includes the location information Po and the current location information Pt, for example. The output unit 58 outputs the information to, for example, an external PC, an external server, a display device, a storage device, a transmitter, a receiver, or a network.

### Example Process by Information Processing Apparatus 50

### Process for Acquiring Location Information Po

FIG. 5 is a flowchart illustrating an example process for acquiring the location information Po by the information processing apparatus 50. The information processing apparatus 50 starts the process illustrated in FIG. 5 at a time when, for example, the information processing apparatus 50 receives an operation for starting to acquire location information of the object 30. In one example, an operator uses, for example, the pointing device 512 illustrated in FIG. 3 to perform the operation of starting to acquire location information of the object 30.

First, in step S11, the reception unit 51 of the information processing apparatus 50 receives the spherical image Im and the identification information Id via the network 400.

Then, in step S12, the object location acquisition unit 52 of the information processing apparatus 50 acquires location information of the forklift 10 by computation, based on the spherical image Im received from the reception unit 51.

Then, in step S13, the object location acquisition unit 52 of the information processing apparatus 50 acquires holding information indicating whether the forklift 10 is holding the object 30, by computation, based on the spherical image Im received from the reception unit 51.

Then, in step S14, the time acquisition unit 53 of the information processing apparatus 50 refers to the location management information 71 and acquires pre-movement time information indicating a time before the movement of the object 30 starts, based on the identification information Id of the object 30. The time acquisition unit 53 acquires information related to the image time t1 and information related to the read time t3.

The operations of steps S12 to S14 may be reordered, as desired, or performed simultaneously.

Then, in step S15, the object location acquisition unit 52 of the information processing apparatus 50 acquires the location information Po of the object 30 by computation, based on the location information of the forklift 10 acquired in step S12 and the holding information acquired in step S13.

Then, in step S16, the object location acquisition unit 52 of the information processing apparatus 50 stores the location information Po of the object 30, the image time t1, the identification information Id indicating the object 30, and the read time t3 in the location management information 71 in association with each other.

Then, in step S17, the information processing apparatus 50 determines whether to end the process. For example, the information processing apparatus 50 determines whether to end the process in accordance with a termination operation by the operator using, for example, the pointing device 512.

If it is determined in step S 17 that the process is to be ended (YES in step S 17), the information processing apparatus 50 ends the process. By contrast, if it is determined that the process is not to be ended (NO in step S 17), the information processing apparatus 50 again performs the operations of step S11 and the subsequent steps.

Accordingly, the information processing apparatus 50 acquires the location information Po of the object 30.

### Process for Acquiring Current Location Information Pt

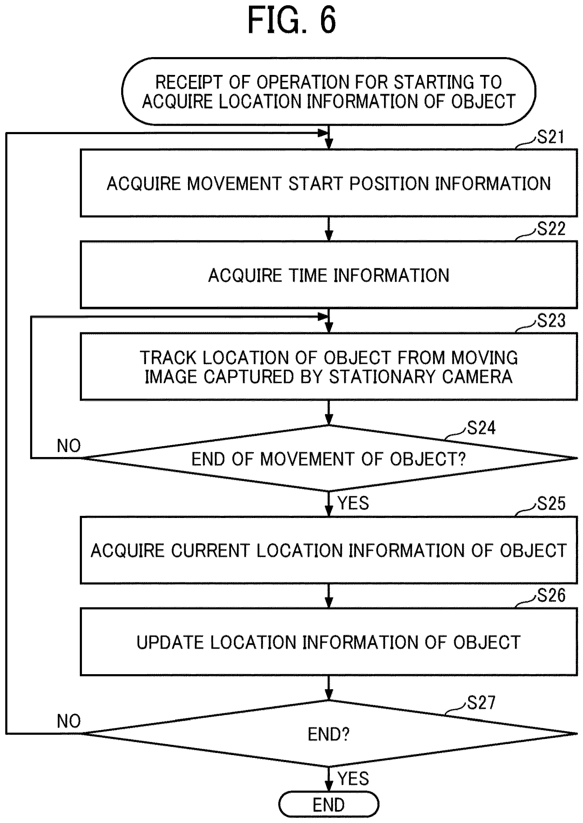

FIG. 6 is a flowchart illustrating an example process for acquiring the current location information Pt by the information processing apparatus 50. The information processing apparatus 50 starts the process illustrated in FIG. 6 at a time when, for example, the information processing apparatus 50 receives an operation for starting to acquire the current location information Pt of the object 30. In one example, the operator uses, for example, the pointing device 512 illustrated in FIG. 3 to perform the operation of starting to acquire the current location information Pt of the object 30.

First, in step S21, the movement start position acquisition unit 54 of the information processing apparatus 50 refers to the location management information 71 and acquires location information of the object 30 before the movement of the object 30 starts, based on the identification information Id of the object 30. In one example, the movement start position acquisition unit 54 refers to the location management information 71 based on the identification information Id of the object 30 and acquires the movement start position information Pp. The movement start position acquisition unit 54 outputs the movement start position information Pp to the tracking unit 55.

Then, in step S22, the time acquisition unit 53 of the information processing apparatus 50 refers to the location management information 71 and acquires pre-movement time information indicating a time before the movement of the object 30 starts, based on the identification information Id of the object 30.

Then, in step S23, the tracking unit 55 of the information processing apparatus 50 tracks the object 30 in part of the captured moving image Mv, namely, in a moving image that starts from a moving image time corresponding to the time information, by image processing, from the location information of the object 30. For example, the tracking unit 55 acquires the moving image time t2 corresponding to the movement start position information Pp from the movement start position acquisition unit 54. While reproducing part of the captured moving image Mv, namely, reproducing the moving image Mv0 that starts from the moving image time t2, the tracking unit 55 performs image processing on each frame of the moving image Mv0 to track the location of the object 30.

Then, in step S24, the tracking unit 55 of the information processing apparatus 50 determines whether the movement of the object 30 ends. For example, the tracking unit 55 may determine that the movement of the object 30 ends when the scene included in the moving image Mv0 remains unchanged for a period of time greater than or equal to a threshold time.

If it is determined in step S24 that the movement does not end (NO in step S24), the operations of step S23 and the subsequent steps are performed again. By contrast, if it is determined that the movement ends (YES in step S24), the tracking unit 55 of the information processing apparatus 50 outputs the end image Iv, which is a frame at the end of the movement, to the current location acquisition unit 56 as a tracking result.

Then, in step S25, the current location acquisition unit 56 of the information processing apparatus 50 acquires the current location information Pt of the object 30 at the end of the movement of the object 30, based on the tracking result of the object 30 obtained by the tracking unit 55. The current location acquisition unit 56 outputs the acquired current location information Pt to the update unit 57.

Then, in step S26, the update unit 57 of the information processing apparatus 50 updates the location management information 71, based on the current location information Pt of the object 30 received from the current location acquisition unit 56.

Then, in step S27, the information processing apparatus 50 determines whether to end the process. For example, the information processing apparatus 50 determines whether to end the process in accordance with a termination operation by the operator using, for example, the pointing device 512.

If it is determined in step S27 that the process is to be ended (YES in step S27), the information processing apparatus 50 ends the process. By contrast, if it is determined that the process is not to be ended (NO in step S27), the information processing apparatus 50 again performs the operations of step S21 and the subsequent steps.

Accordingly, the information processing apparatus 50 acquires the current location information Pt of the object 30.

### Example of Acquired Location Information Po of Object 30

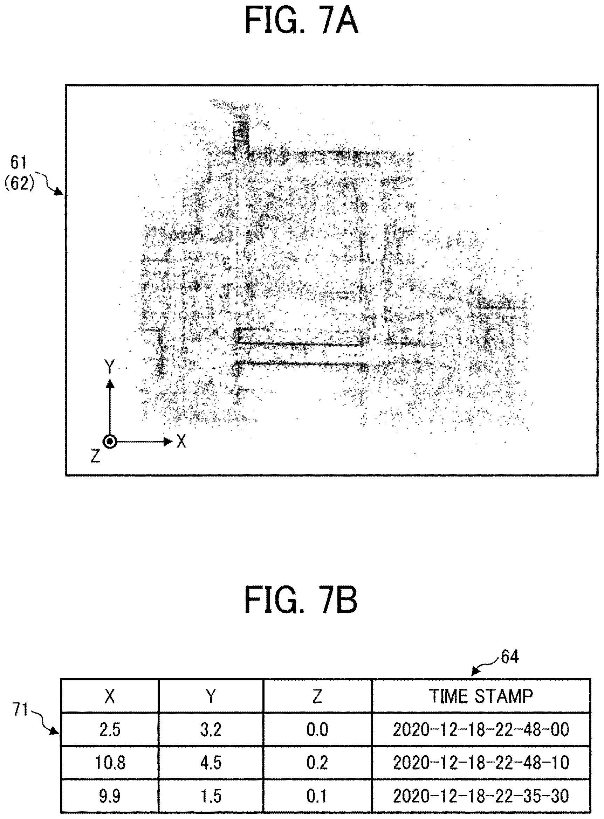

FIGS. 7A and 7B illustrate a first example of the acquired location information Po of the object 30. FIG. 7A is a view of a location map, and FIG. 7B is a table illustrating location information and a time stamp.

A location map 61 illustrated in FIG. 7A is generated by the object location acquisition unit 52 illustrated in FIG. 4A, based on the spherical image Im captured by the spherical camera 20. The object location acquisition unit 52 acquires a point cloud including three-dimensional coordinate information and projects the point cloud onto a two-dimensional plane. As a result, the location map 61 is generated.

The location map 61 is generated in accordance with, for example, the movement of one of the forklifts 10 and is used to acquire information on the locations of all of the forklifts 10 (i.e., localization). The location map 61 allows each of the locations of a plurality of forklifts 10 to be represented in the same coordinate system.

An example of the method for generation of the location map 61 based on a captured image such as the spherical image Im may include simultaneous localization and mapping (SLAM). Reference is made to, for example, Tomono, Masahiro and Yoshitaka Hara, 2020, "Current and Future Directions in SLAM", SYSTEMS, CONTROL AND INFORMATION, volume 64, no. 2, pp. 45-50, available from https://www.jstage.jst.go.jp/article/isciesci/64/2/64_45/_article/-char/ja/. Such localization based on captured images allows acquisition of location information with higher accuracy than any other method for location acquisition using a global positioning system (GPS) or an acceleration sensor in a case where captured images are stably acquired such as in an indoor environment.

In warehouses in which pallets or cargoes are directly placed on the floor (may be referred to as "direct-loading warehouses" in the following description), which are common as cross-docking warehouses, the location map 61 frequently change because the locations of the objects 30 tend to change as the pallets 31 enter and leave the warehouse. The change of the location map 61 may increase complexity in the process for location information acquisition. A direct-loading warehouse refers to a warehouse that is provided with few structures such as shelves since the pallets 31 and the cargos 32 are typically placed on the floor surface. The ceiling height of the warehouse is typically as high as, for example, 5 m, and the field of upward view, i.e., the view toward the ceiling, is large. In one embodiment, accordingly, the location map 61 is generated using an image indicating an upper portion of the spherical image Im captured by the spherical camera 20 to acquire the location information of the forklift 10. Thus, the process for location information acquisition does not need to take into account the pallet 31 or the cargo 32, which is placed on the floor and is likely to be moved. Since the process for location information acquisition does not involve taking into account the pallet 31 or the cargo 32, the location map 61 with small changes over time can be used to simplify the process to acquire the location information Po of the object 30.

The object location acquisition unit 52 acquires the holding information of the object 30 indicating whether the forklift 10 is holding the object 30 by using an image of the scene in front of the forklift 10 in the spherical image Im. Accordingly, the spherical image Im captured by the spherical camera 20 is used to acquire the location information of the forklift 10 and the holding information of the object 30.

The object location acquisition unit 52 uses a location at which the state indicated by the holding information is changed from holding to non-holding among the locations specified in the location information of the forklift 10 indicated in the location map 61 to acquire a location map 62 indicating the location of the object 30. Since the location map 61 illustrated in FIG. 7A also indicates the location information of the object 30, reference numeral 62 representing the location map 62 is presented in parentheses in FIG. 7A.

The location management information 71 illustrated in FIG. 7B includes three-dimensional coordinates of a point cloud indicating the location of the object 30, and a time stamp 64 indicating the time at which the three-dimensional coordinates are acquired. The time stamp 64 corresponds to the image time t1 acquired by the time acquisition unit 53.

The object location acquisition unit 52 excludes information on a point cloud for which a predetermined time has elapsed since the time indicated by the corresponding time stamp, and uses information on a new point cloud to update the location management information 71. Accordingly, even in a case where it is difficult to ensure the field of view upward and the field of view in the horizontal direction is to be used, the location information of the forklift 10 and the location information Po of the object 30 can be suitably acquired in response to a change in the surroundings of the forklift 10. When the movement of the forklift 10 is small, the number of point clouds to be newly acquired is small. In such cases, the number of points may decrease. To address this issue, the object location acquisition unit 52 reduces the frequency of update of the location management information 71, in accordance with the amount of movement of the forklift 10, when the amount of movement is small to prevent an excessive decrease in the amount of information on the point clouds indicated in the location management information 71.

The identification information Id indicating the object 30 is read by the reader 700 from, for example, the barcode attached to the cargo 32 or the pallet 31 when the forklift 10 unloads the pallet 31 from, for example, the container 300 and temporarily stores the pallet 31. The read identification information Id is transmitted from the reader 700 to the information processing apparatus 50 and is stored in the storage unit 70. Such a storage operation is referred to as initial registration.

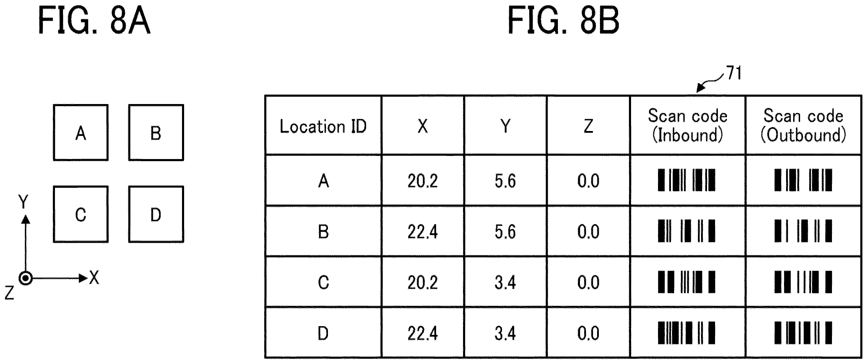

An example of a simpler method for tracking the location of each of a plurality of objects 30 in the warehouse 100 will now be described with reference to FIGS. 8A and 8B. FIGS. 8A and 8B illustrate a second example of the acquired location information Po of the object 30. FIG. 8A is a view of sections, and FIG. 8B is a table illustrating the location information Po and barcodes indicating the sections.

In FIG. 8A, sections A, B, C, and D indicate location ranges determined in advance in the warehouse 100. In each of the sections A, B, C, and D, an operation for the initial registration of the object 30 is performed.

At a time before or after the barcode attached to the object 30 is read using the reader 700, the barcode indicating the section A, B, C, or D where the object 30 is located is read to associate the object 30 with the position coordinates indicating the corresponding one of the sections A, B, C, and D. By including (e.g., attaching) the identification information Id to the objects 30, when the object 30 is carried by the forklift 10, which of the objects 30 is carried can be known and the location of the carried object 30 can be tracked with the identification information Id. The location management information 71 illustrated in FIG. 8B indicates, for each section, an ID number indicating the section, location information of the section, and a barcode indicating the section in association with each other.

In one example, the barcodes indicating the respective sections are printed and carried with a worker who performs the initial registration to allow the worker to scan each of the barcodes by using the reader 700. In another example, barcodes are attached to the floor or to pillars in the warehouse 100 or to the forklift 10. This allows the operator to easily scan the barcode for each of the respective sections before or after performing the operation of scanning the barcode indicating the object 30.

### Example Display Screen for Acquiring Current Location Information Pt of Object 30

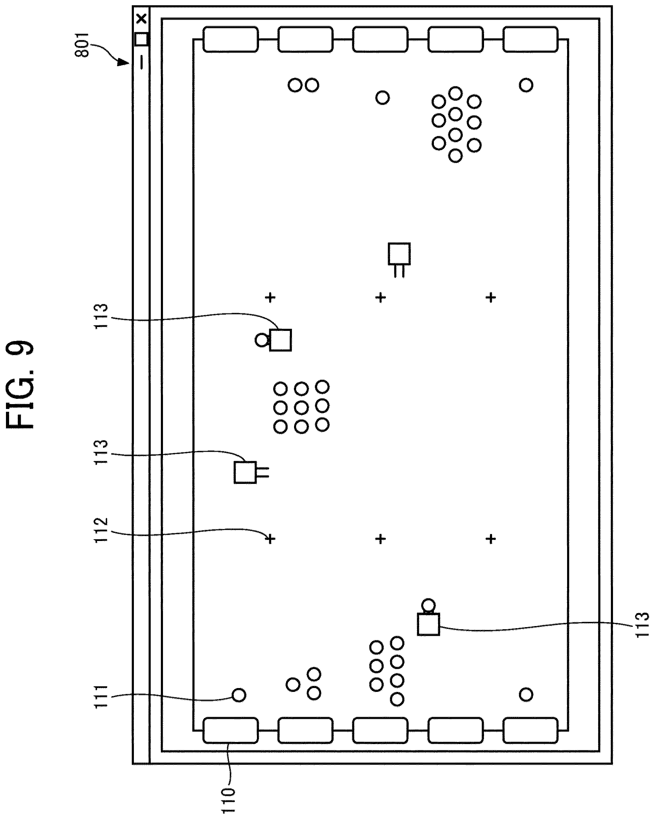

Screens to be displayed for acquiring the current location information Pt of the object 30, whose current location is lost after the object 30 is moved by, for example, a manual pallet jack, will be described with reference to FIGS. 9 to 17. FIGS. 9 to 17 illustrate screens displayed on the display 506 illustrated in FIG. 3 in response to the implementation of an application program installed in the information processing apparatus 50 in the method for acquiring the current location of the object 30 according to the present embodiment. The following describes an example method for acquiring the current location information Pt of the pallet 31 as the object 30.

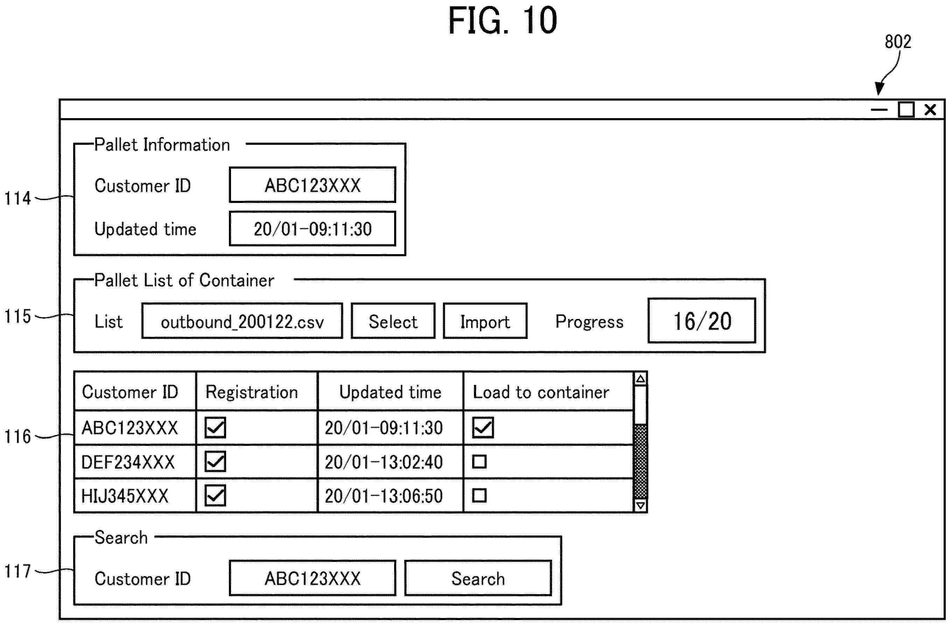

FIG. 9 illustrates an example of a map screen 801 of the warehouse 100. FIG. 10 illustrates an example of an operation screen 802 to be used for the operator to perform an operation.

The map screen 801 illustrated in FIG. 9 schematically displays the inside of the warehouse 100 as viewed from above. Entry/exit gate shapes 110 represent gates for entering and exiting the warehouse 100. Pallet shapes 111 represent pallets 31. Stationary camera shapes 112 represent stationary cameras 60. Forklift shapes 113 represent forklifts 10.

As the forklifts 10 and the pallets 31 move, the forklift shapes 113 and the pallet shapes 111 on the map screen 801 also move in accordance with the movement of the forklifts 10 and the pallets 31. A viewer who is viewing the map screen 801 visually checks the forklift shapes 113 and the pallet shapes 111 to recognize the locations of the forklifts 10 and the pallets 31.

As illustrated in FIG. 10, the operation screen 802 includes a pallet information display portion 114, a pallet designation portion 115, a pallet list display portion 116, and a target designation portion 117. The pallet information display portion 114 displays the time at which the identification information Id of a pallet 31 designated on the map screen 801 among the pallets 31 is updated. In response to the import of a pallet list including information on all of the pallets 31 managed in the warehouse 100, the application program allows the information on all of the pallets 31 to be displayed in the pallet list display portion 116 in a list view. In response to the operator entering the identification information Id into the pallet designation portion 115, a corresponding one of the pallet shapes 111 on the map screen 801 is highlighted. Since pallet information is managed by the information processing apparatus 50 as a pallet list, the operator reads the pallet list at any time and displays the pallet list on the map screen 801 and the operation screen 802.

### First Example of Target Pallet Designation Method

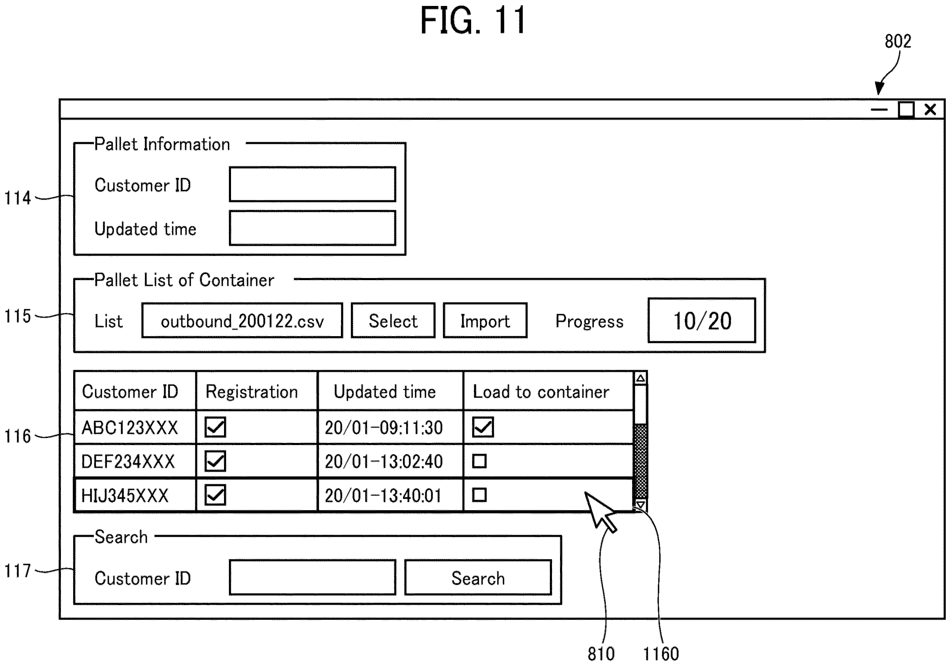

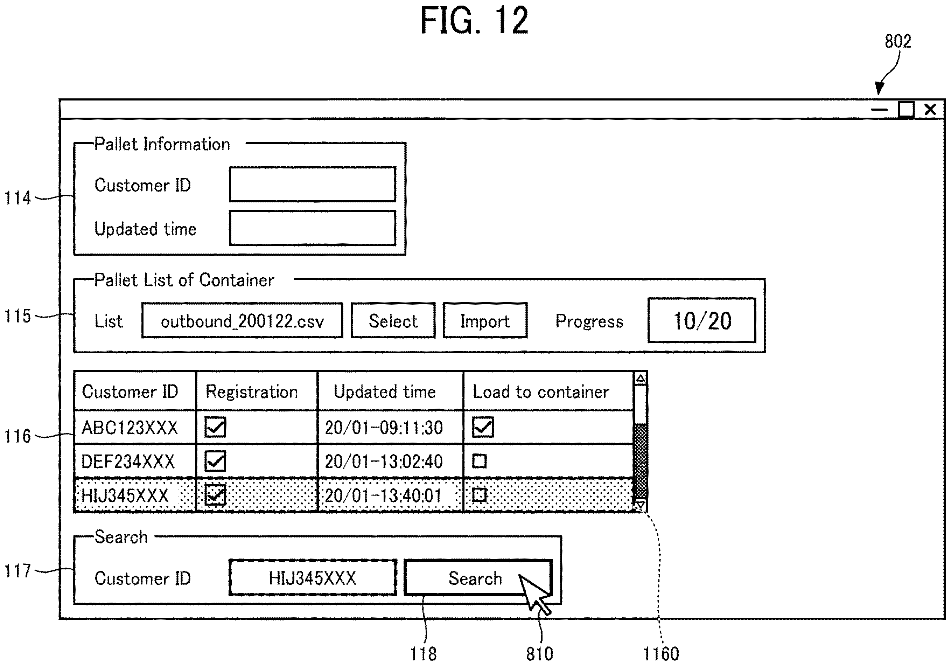

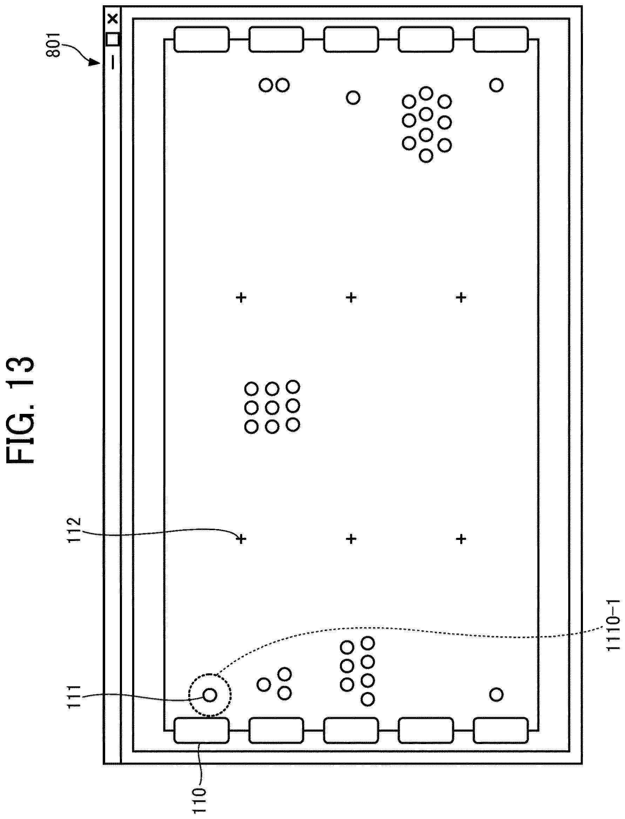

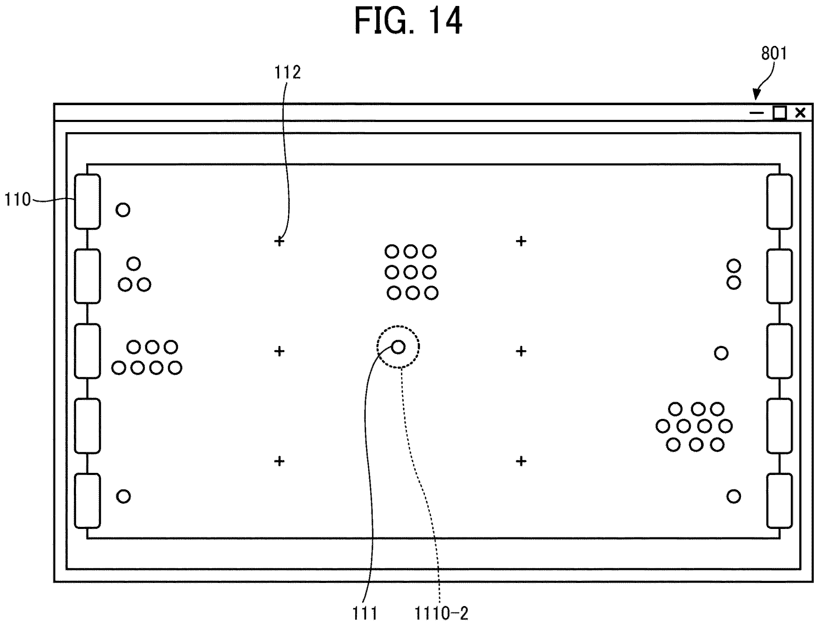

FIGS. 11 to 14 illustrate a first example of a method for designating a target pallet from which the current location information Pt is to be acquired (hereinafter simply referred to as "target pallet"). In the first example, the target pallet is designated by pointing to pallet information displayed in the pallet list. FIG. 11 is an illustration of an example designation screen in the first example. FIGS. 12 and 13 are illustrations of example designation result screens in the first example. FIG. 14 is an illustration of an example acquisition result screen indicating the current location of the target pallet.

FIG. 11 illustrates the operation screen 802 after the pallet list is imported. The operator operates the pointing device 512 illustrated in FIG. 3 to move a cursor 810 being displayed on the display 506. The operator points to pallet information 1160 of the target pallet from within the pallet list displayed in the pallet list display portion 116 by using the cursor 810 to designate the target pallet.

In response to the designation of the target pallet, as indicated by a dot-hatched area in FIG. 12, the pallet information 1160 of the target pallet is highlighted. After that, the operator points to an acquisition start button 118 with the cursor 810. Then, the information processing apparatus 50 starts a process for acquiring the current location information of the target pallet.

FIG. 13 illustrates a point at which the target pallet has been located on the map screen 801 before the target pallet is moved by the manual pallet jack. In FIG. 13, one of the pallet shapes 111 is surrounded by a target indicator 1110-1 marked by a dotted-line circle on the map screen 801. The pallet shape 111 surrounded by the target indicator 1110-1 corresponds to the target pallet and is located at a position corresponding to the location of the target pallet before the target pallet is moved by the manual pallet jack.

FIG. 14 illustrates the current location information Pt acquired as a result of the acquisition process. In FIG. 14, one of the pallet shapes 111 is surrounded by a target indicator 1110-2 marked by a dotted-line circle on the map screen 801. The pallet shape 111 surrounded by the target indicator 1110-2 corresponds to the target pallet and is located at a position corresponding to the location of the target pallet after the target pallet is moved by the manual pallet jack. Accordingly, the information processing apparatus 50 designates the target pallet and displays the acquired current location information Pt.

### Second Example of Target Pallet Designation Method

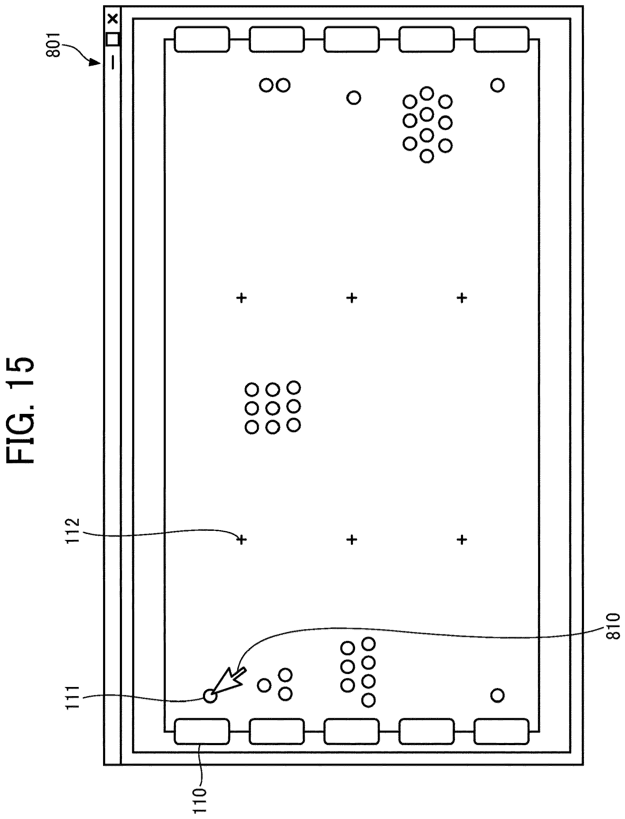

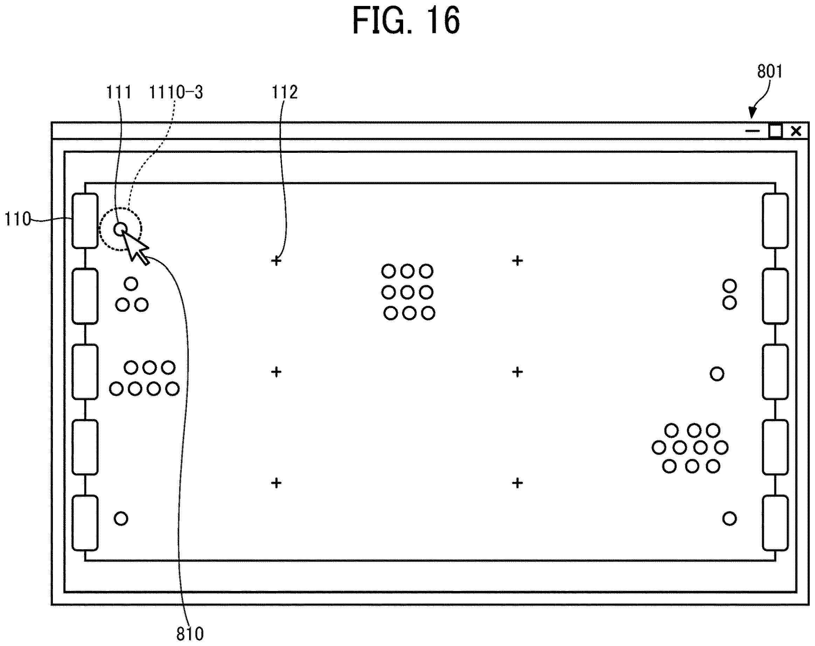

FIGS. 15 and 16 illustrate a second example of the method for designating the target pallet. In the second example, the target pallet is designated by pointing to one of the pallet shapes 111 on the map screen 801. FIG. 15 is an illustration of an example designation screen in the second example. FIG. 16 is an illustration of an example designation result screen in the second example.

As illustrated in FIG. 15, in the second example, the operator points to a pallet shape 111 corresponding to the target pallet among the pallet shapes 111 displayed on the map screen 801 by using the cursor 810 to designate the target pallet.

In response to the designation of the target pallet, in FIG. 16, the pallet shape 111 corresponding to the designated target pallet is displayed to be surrounded by a target indicator 1110-3 marked by a dotted-line circle on the map screen 801. After that, the operator points to the acquisition start button 118 illustrated in FIG. 12 with the cursor 810. Then, the information processing apparatus 50 starts a process for acquiring the current location information of the target pallet. In one embodiment, the information processing apparatus 50 displays the current location information Pt, which is acquired as a result of the acquisition process, in the manner illustrated in FIG. 14.

### Third Example of Target Pallet Designation Method

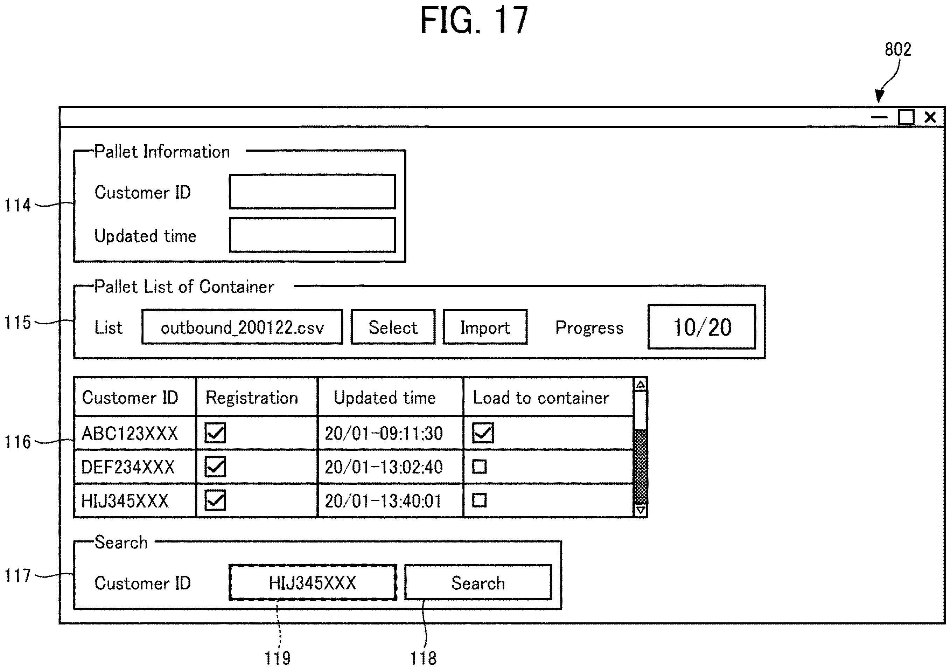

FIG. 17 illustrates a third example of the method for designating the target pallet. In the third example, the target pallet is designated by entering customer identification information. FIG. 17 is an illustration of an example designation screen in the third example.

FIG. 17 illustrates the operation screen 802 after the pallet list is imported. In FIG. 17, a customer identification information entry portion 119 is a text box for entering customer identification information corresponding to the target pallet to designate the target pallet. The operator enters the customer identification information as text into the customer identification information entry portion 119 to designate the target pallet.

After designating the target pallet, the operator points to the acquisition start button 118 illustrated in FIG. 12 with the cursor 810. Then, the information processing apparatus 50 starts a process for acquiring the current location information of the target pallet. In one embodiment, the information processing apparatus 50 displays the current location information Pt, which is acquired as a result of the acquisition process, in the manner illustrated in FIG. 14.

As described above, in the information processing apparatus 50, the movement start position acquisition unit 54 acquires the movement start position information Pp. In the information processing apparatus 50, furthermore, the tracking unit 55 tracks the location of the object 30 in part of the captured moving image Mv, namely, in the moving image Mv0 captured for a period of time from the start of the movement of the object 30 at the movement start position to the end of the movement of the object 30. In the information processing apparatus 50, furthermore, the current location acquisition unit 56 acquires the current location information Pt of the object 30 at the end of the movement of the object 30, based on the tracking result of the object 30 obtained by the tracking unit 55.

The present embodiment provides a configuration for tracking the object 30 while reproducing the moving image Mv0 captured for the period of time from the start of the movement of the object 30 by, for example, the manual pallet jack to the end of the movement of the object 30. This configuration reduces the reproduction time compared to a configuration for tracking the object 30 while reproducing the entire captured moving image Mv. As a result, the present embodiment can provide an information processing method, a program, and the information processing apparatus 50 that acquire the current location information Pt of the object 30 in a short period of time in a case where the current location of the object 30 is lost.

In the present embodiment, furthermore, the update unit 57 of the information processing apparatus 50 updates the location management information 71 in which the identification information Id of the object 30 and the location information Po of the object 30 are associated with each other, based on the current location information Pt of the object 30. Accordingly, the current location information Pt of the object 30 can be corrected correctly in a case where the current location of the object 30 is lost. This enables accurate position management of the object 30 in the warehouse 100.

### Second Embodiment

Next, an information processing apparatus according to a second embodiment will be described. In the second embodiment, substantially the same elements as those in the embodiment described above are denoted by the same reference numerals, and redundant descriptions thereof will be omitted. The same applies to other embodiments described below.

Unlike the first embodiment, the information processing apparatus according to the present embodiment acquires location information of the object 30 before movement of the object 30 starts, based on the location management information 71 in which the identification information Id of the object 30, location information of the object 30, first time information (pre-movement time information) indicating a time before the movement of the object 30 starts, and second time information indicating a time at which the movement of the object 30 ends are associated with each other.

### Example Functional Configuration of Information Processing Apparatus 50a

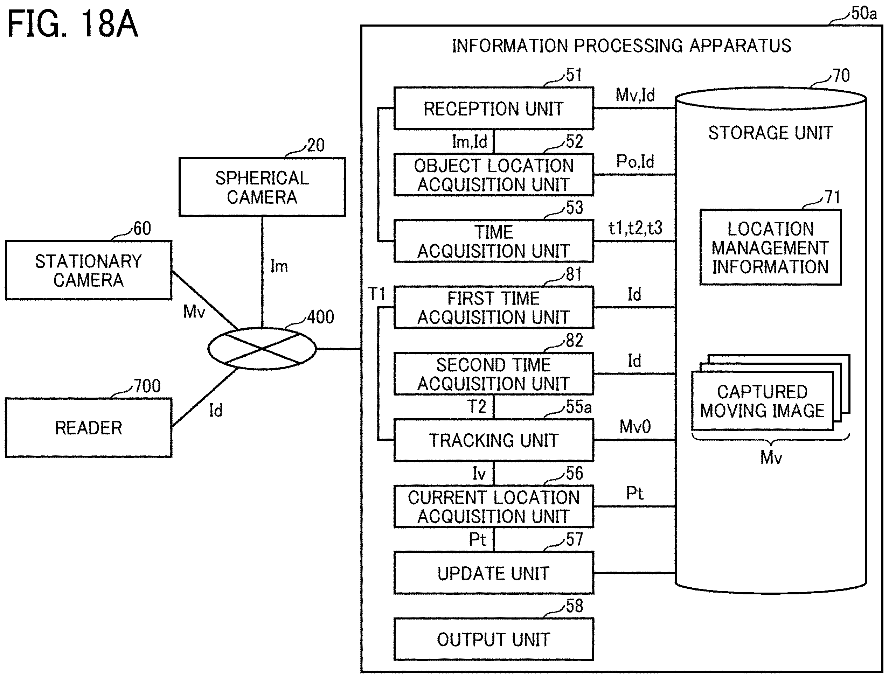

FIG. 18A is a block diagram illustrating a functional configuration of an information processing apparatus 50a according to the present embodiment. The information processing apparatus 50a has the same hardware configuration as the hardware configuration of the information processing apparatus 50 illustrated in FIG. 3.

As illustrated in FIG. 18A, the information processing apparatus 50a includes a first time acquisition unit 81, a second time acquisition unit 82, and a tracking unit 55a. Each of these units is a function or means implemented by or caused to function by one or more of the hardware elements illustrated in FIG. 3 operating in accordance with instructions from the CPU 501 according to a program loaded onto the RAM 503 from the HD 504.

In one example, some of the functions illustrated in FIG. 18A may be implemented by an external apparatus other than the information processing apparatus 50a. In another example, some of the functions illustrated in FIG. 18A may be implemented by the information processing apparatus 50a and an external apparatus other than the information processing apparatus 50a performing distributed processing. The external apparatus may be an apparatus connected to the information processing apparatus 50a via the network 400. Examples of such an apparatus include a PC other than the information processing apparatus 50a, and an external server.

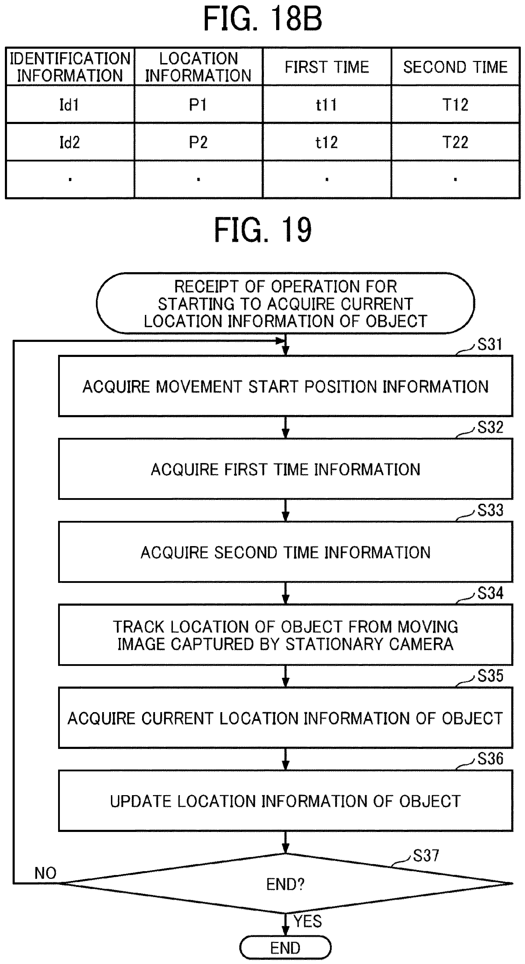

The first time acquisition unit 81 refers to the location management information 71 in which the identification information Id of the object 30, location information of the object 30, first time information T1 (pre-movement time information) indicating a time before the movement of the object 30 starts, and second time information T2 indicating a time at which the movement of the object 30 ends are associated with each other. Further, the first time acquisition unit 81 acquires the first time information T1 indicating a time before the movement of the object 30 starts, based on the identification information Id of the object 30. FIG. 18B is a table illustrating location management information according to the present embodiment. The first time information T1 is information related to a first time, which is a time before the movement of the object 30 starts. The first time acquisition unit 81 outputs the first time information T1 to the tracking unit 55a.

The first time information T1 and a method for acquiring the first time information T1 by the first time acquisition unit 81 will be described in detail. For example, a worker who moves the object 30 with a manual pallet jack scans the code 33 attached to the object 30 by using the reader 700 before the worker starts moving the object 30 with the manual pallet jack. It is assumed that, before moving the object 30 with the manual pallet jack, the worker is obliged to scan the code 33 for the object 30 to be moved by using the reader 700. The reader 700 transmits the read identification information Id to the information processing apparatus 50a. The time at which the information processing apparatus 50a receives, at the reception unit 51, the identification information Id before the movement of the object 30 is stored in the location management information 71 in the storage unit 70 in association with the identification information Id. The first time acquisition unit 81 refers to the location management information 71 in the storage unit 70 based on the identification information Id of the object 30 to acquire the first time information T1. The first time acquisition unit 81 may acquire the first time information T1 by using a method other than that described above.

The second time acquisition unit 82 refers to the location management information 71 and acquires the second time information T2 indicating the time at which the movement of the object 30 ends, based on the identification information Id of the object 30. The second time information T2 is information related to a second time, which is a time at which the movement of the object 30 ends. The second time acquisition unit 82 outputs the second time information T2 to the tracking unit 55a.

The second time information T2 and a method for acquiring the second time information T2 by the second time acquisition unit 82 will be described in detail. For example, a worker who moves the object 30 with a manual pallet jack scans the code 33 attached to the object 30 by using the reader 700 after the worker ends moving the object 30 with the manual pallet jack. It is assumed that, after moving the object 30 with the manual pallet jack, the worker is obliged to scan the code 33 for the object 30 that has been moved by using the reader 700. The reader 700 transmits the read identification information Id to the information processing apparatus 50a. The time at which the information processing apparatus 50a receives, at the reception unit 51, the identification information Id after the movement of the object 30 is stored in the location management information 71 in the storage unit 70 in association with the identification information Id. The second time acquisition unit 82 refers to the location management information 71 in the storage unit 70 based on the identification information Id of the object 30 to acquire the second time information T2. The second time acquisition unit 82 may acquire the second time information T2 by using a method other than that described above.

The tracking unit 55a tracks the object 30 in part of the captured moving image Mv, namely, in a moving image Mv0 that starts from a moving image time corresponding to the first time information T1, by image processing, from the location information of the object 30. The tracking unit 55a outputs an end image Iv to the current location acquisition unit 56 as a tracking result. The end image Iv is included in the moving image Mv0 and is a frame after the location of the object 30 is tracked for a period of time from the first time to the second time.

The current location acquisition unit 56 acquires current location information Pt of the object 30 at the end of the movement of the object 30, based on the tracking result of the object 30 obtained by the tracking unit 55a. The information processing apparatus 50a sets the acquired current location information Pt of the object 30 as location information of the object 30 obtained before the movement of the object 30 starts.

### Example Process by Information Processing Apparatus 50a

FIG. 19 is a flowchart illustrating an example process for acquiring the current location information Pt by the information processing apparatus 50a. The information processing apparatus 50a starts the process illustrated in FIG. 19 at a time when, for example, the information processing apparatus 50a receives an operation for starting to acquire the current location information Pt of the object 30. In one example, the operator uses, for example, the pointing device 512 illustrated in FIG. 3 to perform the operation of starting to acquire the current location information Pt of the object 30.

First, in step S31, the object location acquisition unit 52 of the information processing apparatus 50a refers to the location management information 71 and acquires location information of the object 30 before the movement of the object 30 starts, based on the identification information Id of the object 30.

Then, in step S32, the first time acquisition unit 81 of the information processing apparatus 50a refers to the location management information 71 and acquires the first time information T1 indicating a time before the movement of the object 30 starts, based on the identification information Id of the object 30. The first time acquisition unit 81 outputs the first time information T1 to the tracking unit 55a.

Then, in step S33, the second time acquisition unit 82 of the information processing apparatus 50a refers to the location management information 71 and acquires the second time information T2 indicating a time at which the movement of the object 30 ends, based on the identification information Id of the object 30. The second time acquisition unit 82 outputs the second time information T2 to the tracking unit 55a.

Then, in step S34, the tracking unit 55a of the information processing apparatus 50a tracks the object 30 in part of the captured moving image Mv, namely, in the moving image Mv0 that starts from the moving image time corresponding to the first time information T1, by image processing, from the location information of the object 30. The tracking unit 55a outputs the end image Iv, which is included in the moving image Mv0 and which is a frame after the location of the object 30 is tracked until the second time, to the current location acquisition unit 56 as a tracking result.

Then, in step S35, the current location acquisition unit 56 of the information processing apparatus 50a acquires the current location information Pt of the object 30 at the end of the movement of the object 30, based on the tracking result of the object 30 obtained by the tracking unit 55a. The current location acquisition unit 56 outputs the acquired current location information Pt to the update unit 57.

The operations of steps S36 and S37 are substantially the same as the operations of steps S26 and S27 in FIG. 6, respectively, and redundant descriptions thereof will thus be omitted.

Accordingly, the information processing apparatus 50a acquires the current location information Pt of the object 30.

### Example Display Screen for Acquiring Current Location Information Pt of Object 30

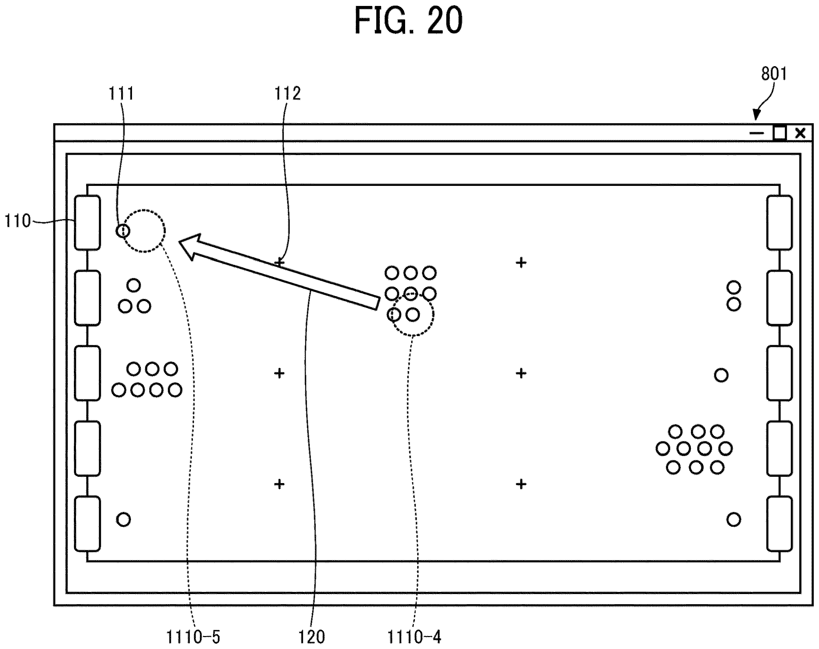

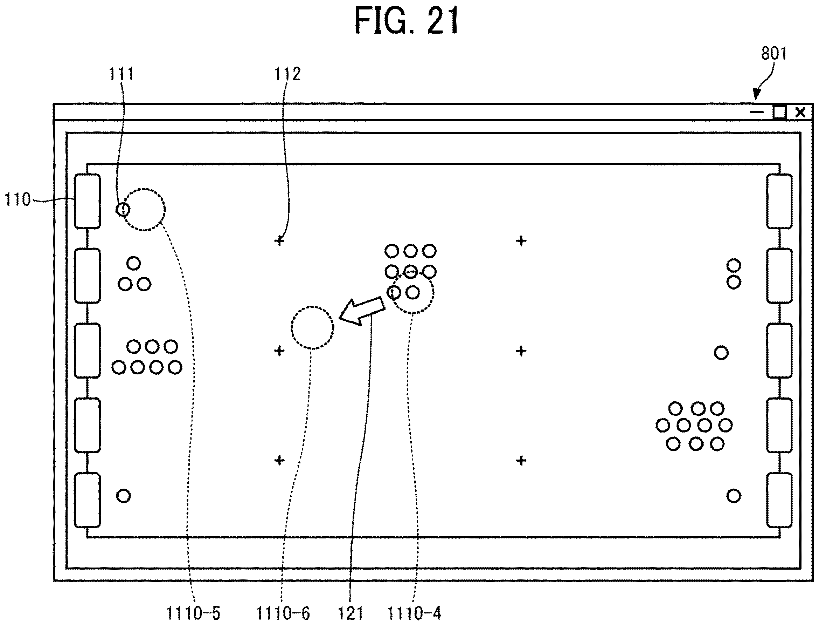

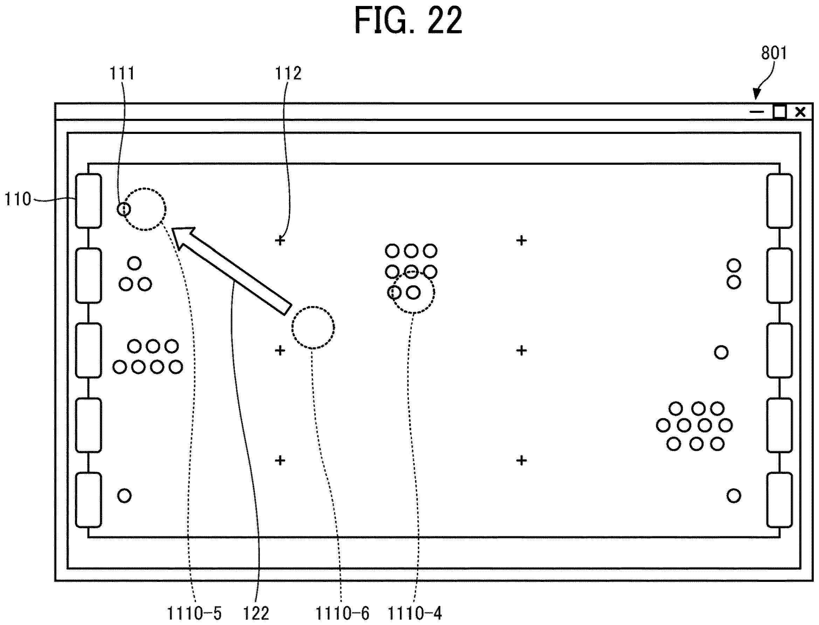

FIG. 20 is an illustration of how an object is moved by a manual pallet jack on the map screen 801. FIGS. 21 and 22 are illustrations of how the object is moved on the map screen 801. FIGS. 20 to 22 illustrate screens displayed on the display 506 in response to the implementation of an application program installed in the information processing apparatus 50a in the method for acquiring the current location of the object 30 according to the present embodiment.

In FIG. 20, a target indicator 1110-4 represents a target pallet before the target pallet is moved by a manual pallet jack. A target indicator 1110-5 represents the target pallet after the target pallet is moved by the manual pallet jack. A movement route 120 represents a route along which the target pallet is moved by the manual pallet jack. A worker who moves the target pallet with the manual pallet jack scans a code 33 attached to the manual pallet jack by using the reader 700. In one example, any one of the codes 33 stored in the reader 700 may be selected and read.

In FIG. 21, a movement route 121 is a route that is on the way to the destination and along which the target pallet is moved. A target indicator 1110-6 represents the location of the target pallet in the movement route 121.

In FIG. 22, a movement route 122 is a route that is on the way to the destination and along which the target pallet is moved. The target indicator 1110-6 represents the location of the target pallet in the movement route 122. The target pallet moved by the manual pallet jack is placed in an unoccupied space.

As described above, in the information processing apparatus 50a, the first time acquisition unit 81 acquires the first time information T1 based on the identification information Id of the object 30. In the information processing apparatus 50a, furthermore, the second time acquisition unit 82 acquires the second time information T2 based on the identification information Id of the object 30. In the information processing apparatus 50a, furthermore, the tracking unit 55a tracks the location of the object 30 in part of the captured moving image Mv, namely, in the moving image Mv0 from the first time to the second time. In the information processing apparatus 50a, furthermore, the current location acquisition unit 56 acquires the current location information Pt of the object 30 at the end of the movement of the object 30, based on the tracking result of the object 30 obtained by the tracking unit 55a.

The present embodiment provides a configuration for tracking the object 30 while reproducing the moving image Mv0 captured for the period of time from the start of the movement of the object 30 by, for example, the manual pallet jack to the end of the movement of the object 30. This configuration reduces the reproduction time compared to a configuration for tracking the object 30 while reproducing the entire captured moving image Mv. As a result, the present embodiment can provide an information processing method, a program, and the information processing apparatus 50 that acquire the current location information Pt of the object 30 in a short period of time in a case where the current location of the object 30 is lost.

In the first embodiment, the position at which the movement of the object 30 by a manual pallet jack ends is detected by image processing. In the present embodiment, by contrast, information related to the positions at which the movement of the object 30 with a manual pallet jack starts and ends is acquired based on the time information stored in the location management information 71. Since the detection errors in image processing are not included, the present embodiment enables more accurate acquisition of the current location information Pt of the object 30 than the first embodiment.

### Third Embodiment

Next, an information processing apparatus according to a third embodiment will be described. In the present embodiment, unlike the first and second embodiments, when a first moving image among a plurality of captured moving images Mv obtained by a plurality of stationary cameras 60 no longer includes the object 30 after the object 30 is moved, an identifying unit identifies a second moving image including the object 30 among the plurality of captured moving images Mv to track the object 30.

### Example Functional Configuration of Information Processing Apparatus 50b

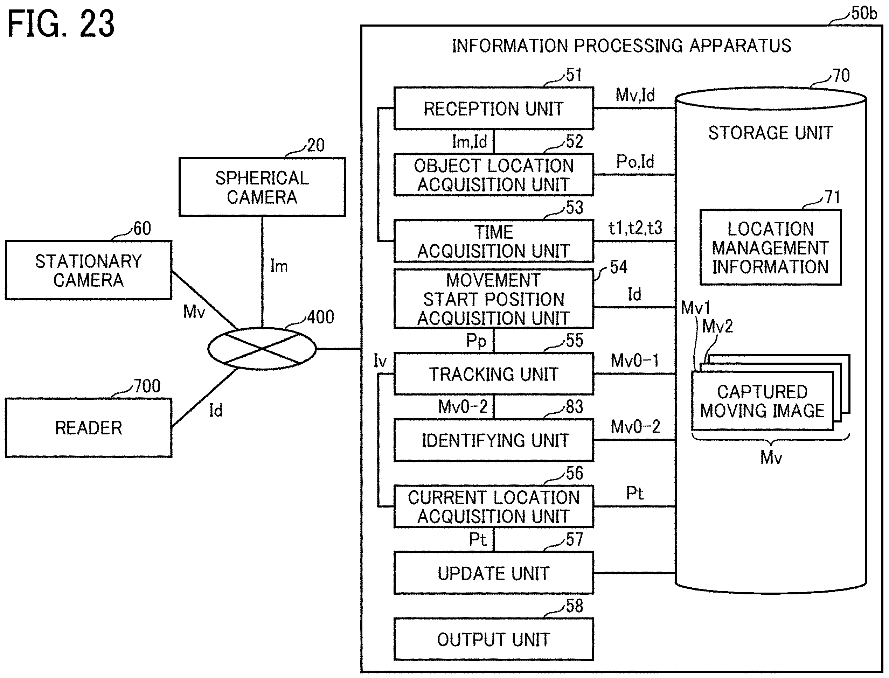

FIG. 23 is a block diagram illustrating a functional configuration of an information processing apparatus 50b according to the present embodiment. As illustrated in FIG. 23, the information processing apparatus 50b includes an identifying unit 83. The identifying unit 83 is a function or means implemented by or caused to function by one or more of the hardware elements illustrated in FIG. 3 operating in accordance with instructions from the CPU 501 according to a program loaded onto the RAM 503 from the HD 504.

In one example, the function of the identifying unit 83 may be implemented by an external apparatus other than the information processing apparatus 50b. In another example, the function of the identifying unit 83 may be implemented by the information processing apparatus 50b and an external apparatus other than the information processing apparatus 50b performing distributed processing. The external apparatus may be an apparatus connected to the information processing apparatus 50b via the network 400. Examples of such an apparatus include a PC other than the information processing apparatus 50b, and an external server.

When a first moving image Mv1 among the plurality of captured moving images Mv obtained by the plurality of stationary cameras 60 no longer includes the object 30 after the object 30 is moved, the identifying unit 83 identifies a second moving image Mv2 (second moving image) including the object 30 among the plurality of captured moving images Mv to track the object 30. When a moving image Mv0-1 in the first moving image Mv1 no longer includes the object 30, the tracking unit 55 tracks the location of the object 30 in a moving image Mv0-2 in the second moving image Mv2 identified by the identifying unit 83.

The moving image Mv0-1 is a part of the first moving image Mv1 and is a moving image from the time at which the movement of the object 30 starts to the time at which the object 30 disappears from the first moving image Mv1. The moving image Mv0-2 is a part of the second moving image Mv2 and is a moving image from the time at which the object 30 disappears from the first moving image Mv1 to the time at which the movement of the object 30 ends. In another example, the moving image Mv0-2 is a part of the second moving image Mv2 and is a moving image from the time at which the object 30 disappears from the first moving image Mv1 to the time at which the object 30 disappears from the second moving image Mv2.

### Example Process by Information Processing Apparatus 50b

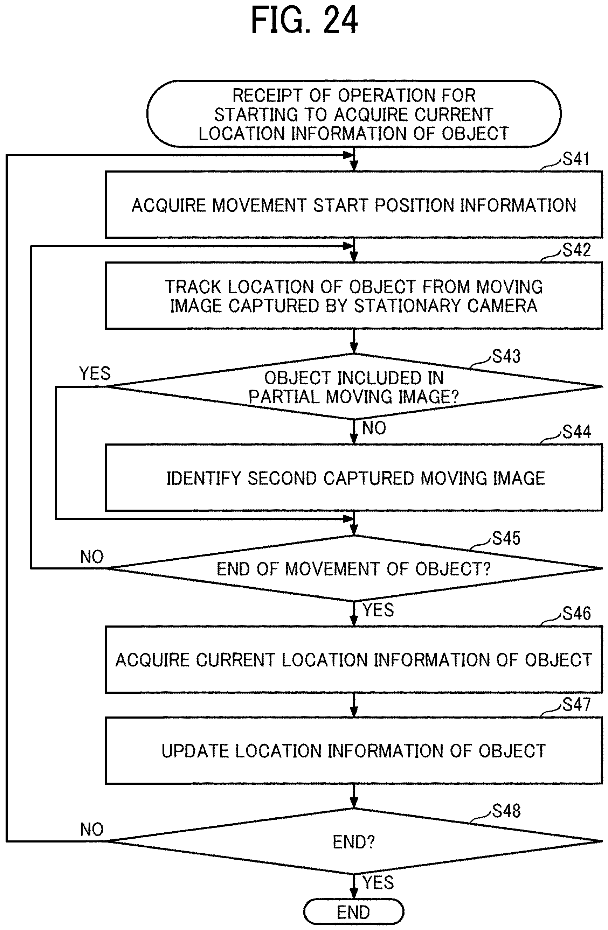

FIG. 24 is a flowchart illustrating a process for acquiring the current location of the object 30 by the information processing apparatus 50b according to the present embodiment. The information processing apparatus 50b starts the process illustrated in FIG. 24 at a time when, for example, the information processing apparatus 50b receives an operation for starting to acquire the current location information Pt of the object 30. In one example, the operator uses, for example, the pointing device 512 illustrated in FIG. 3 to perform the operation of starting to acquire the current location information Pt of the object 30.

First, in step S41, the movement start position acquisition unit 54 of the information processing apparatus 50b acquires the movement start position information Pp based on the identification information Id of the object 30. The movement start position acquisition unit 54 outputs the movement start position information Pp to the tracking unit 55.

Then, in step S42, the tracking unit 55 of the information processing apparatus 50b tracks the location of the object 30 in part of the captured moving image Mv, namely, in the moving image Mv0-1.

Then, in step S43, the identifying unit 83 of the information processing apparatus 50b determines whether the moving image Mv0-1 (partial moving image) includes the object 30.

If it is determined in step S43 that the moving image Mv0-1 includes the object 30 (YES in step S43), the information processing apparatus 50b advances the process to step S45. By contrast, when it is determined in step S43 that the moving image Mv0-1 no longer includes the object 30 (NO in step S43), in step S44, the identifying unit 83 of the information processing apparatus 50b identifies the second moving image Mv2 including the object 30, from among the plurality of captured moving images Mv to track the object 30.

Then, in step S45, the tracking unit 55 of the information processing apparatus 50b determines whether the movement of the object 30 ends. For example, the tracking unit 55 may determine that the movement of the object 30 ends when the scene included in the moving image Mv0-1 or the moving image Mv0-2 remains unchanged for a period of time greater than or equal to a threshold time.

If it is determined in step S45 that the movement does not end (NO in step S45), the operations of step S42 and the subsequent steps are performed again. By contrast, if it is determined that the movement ends (YES in step S45), the tracking unit 55 of the information processing apparatus 50b outputs the end image Iv, which is a frame at the end of the movement, to the current location acquisition unit 56 as a tracking result.

The operations of steps S46 to S48 are substantially the same as the operations of steps S25 to S27 in FIG. 6, respectively, and redundant descriptions thereof will thus be omitted.

Accordingly, the information processing apparatus 50b acquires the current location information Pt of the object 30.

As described above, in a case where the first moving image Mv1 among the plurality of captured moving images Mv obtained by the plurality of stationary cameras 60 does not include the object 30 after the object 30 is moved, the information processing apparatus 50b identifies, in the identifying unit 83, the second moving image Mv2, which includes the object 30, among the plurality of captured moving images Mv to track the object 30. This configuration allows the location of the object 30, which is not included in the first moving image Mv1, to be tracked in the second moving image Mv2. The other advantages of the present embodiment are substantially the same as those of the first embodiment.

### Fourth Embodiment

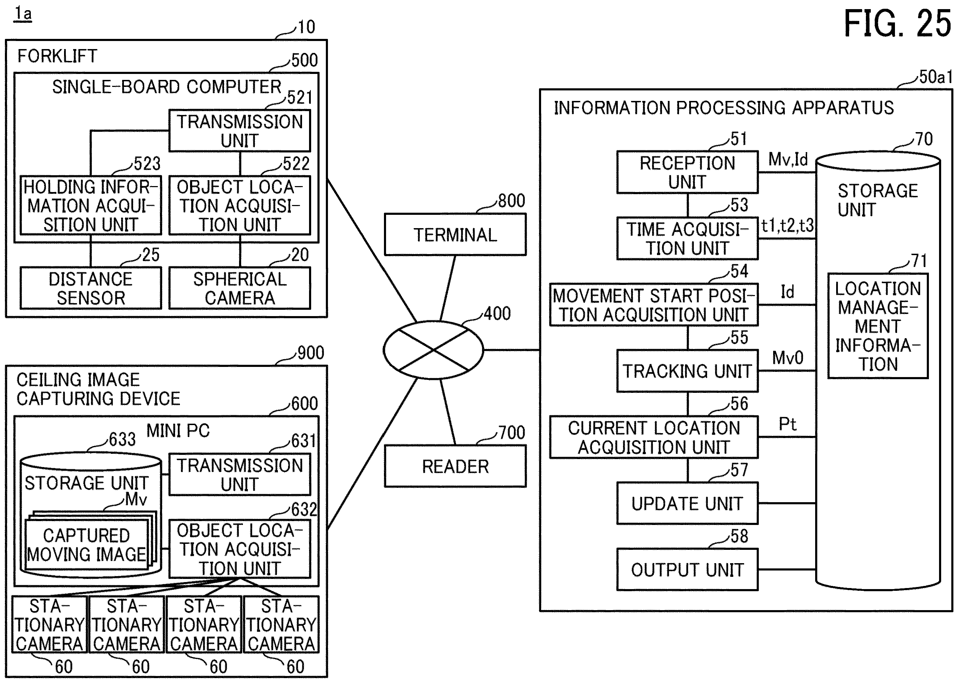

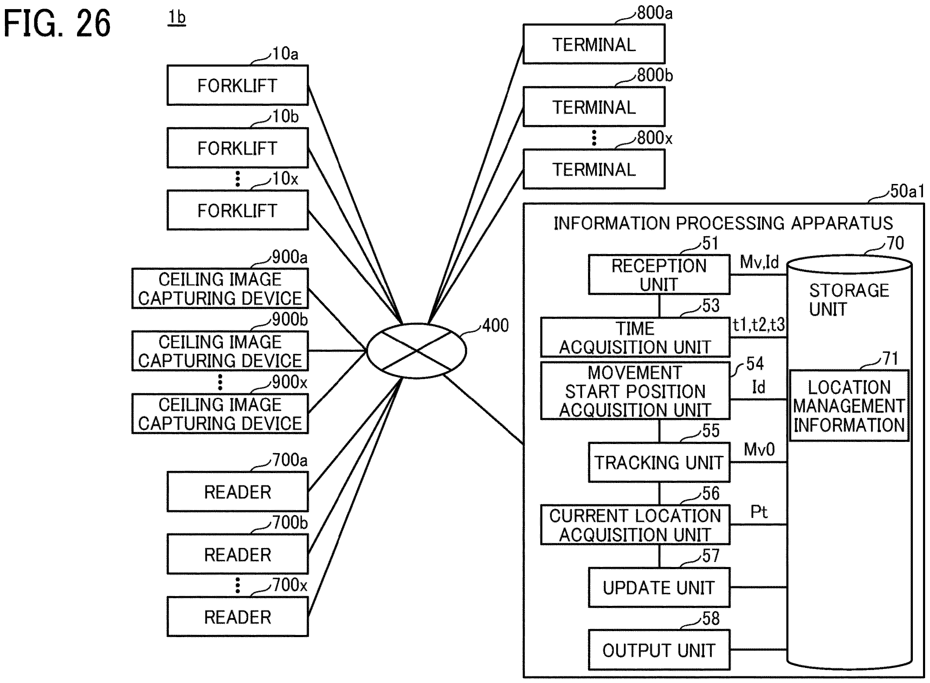

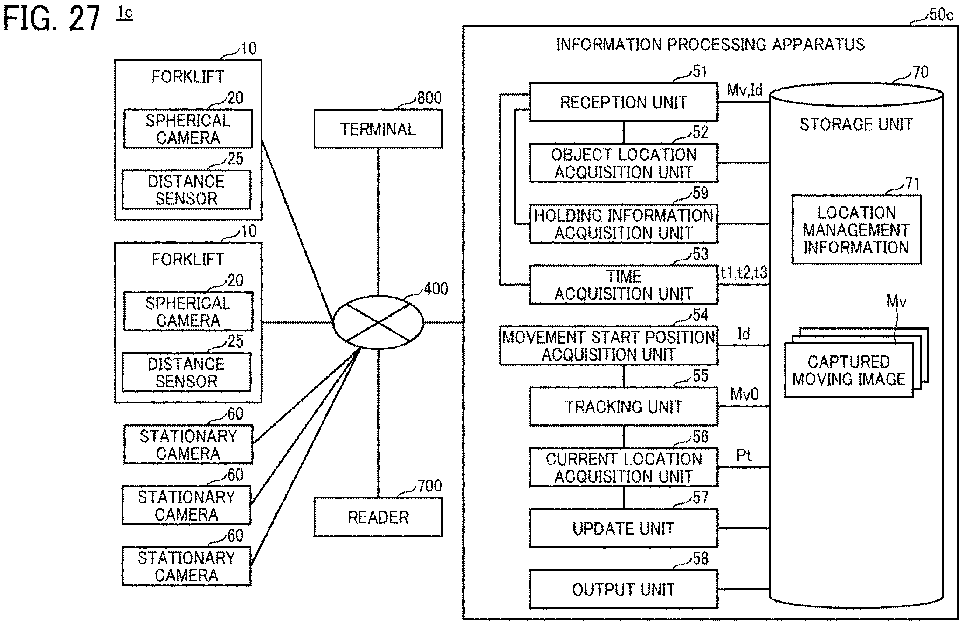

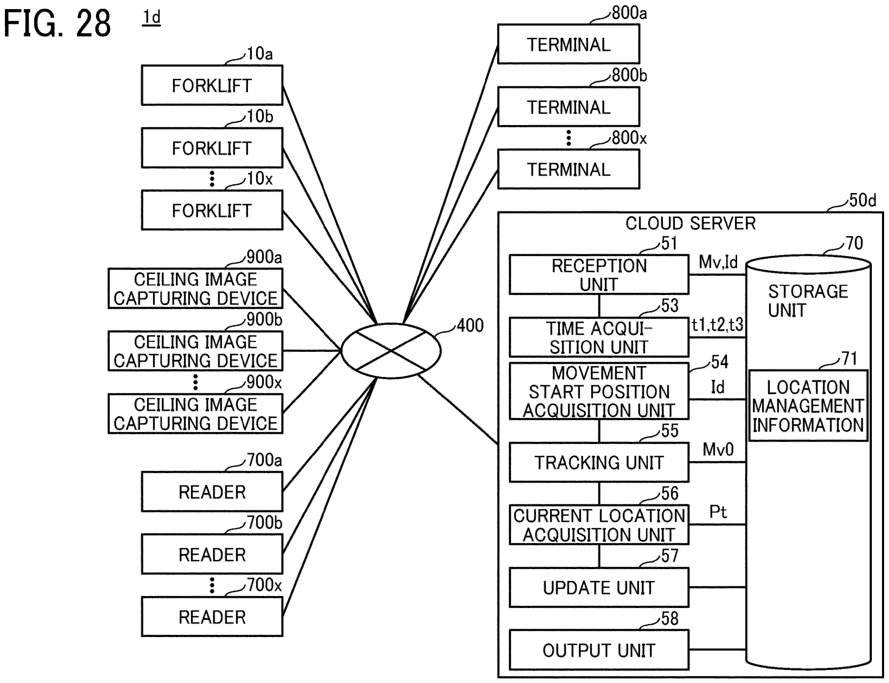

Next, an information processing system according to a fourth embodiment will be described. FIG. 25 is a block diagram of an information processing system 1a according to a first example of the fourth embodiment. FIG. 26 is a block diagram of an information processing system 1b according to a second example of the fourth embodiment. FIG. 27 is a block diagram of an information processing system 1c according to a third example of the fourth embodiment. FIG. 28 is a block diagram of an information processing system 1d according to a fourth example of the fourth embodiment.

### First Example

As illustrated in FIG. 25, the information processing system 1a includes an information processing apparatus 50a1, a single-board computer 500, and a mini PC 600. The information processing apparatus 50a1, the single-board computer 500, and the mini PC 600 correspond to multiple information processing apparatuses that are communicably connected to each other.

The single-board computer 500 is mounted on the forklift 10. The single-board computer 500 includes a transmission unit 521, an object location acquisition unit 522, and a holding information acquisition unit 523. The single-board computer 500 is communicably connected to a distance sensor 25 and the spherical camera 20. The single-board computer 500 is also communicably connected to the network 400.

In the single-board computer 500, the object location acquisition unit 522 acquires location information of the forklift 10 from the spherical image Im input from the spherical camera 20. In the single-board computer 500, furthermore, the holding information acquisition unit 523 acquires the holding information of the object 30, based on the distance from the forklift 10 to the object 30. The distance is input from the distance sensor 25. In the single-board computer 500, the transmission unit 521 transmits the location information of the forklift 10 and the holding information of the object 30 to the information processing apparatus 50a1 via the network 400. In one example, the holding information acquisition unit 523 may acquire the holding information of the object 30, based on the spherical image Im obtained by the spherical camera 20 instead of the distance detected by the distance sensor 25.

The mini PC 600 is mounted on a ceiling image capturing device 900. The mini PC 600 is communicably connected to a plurality of stationary cameras 60. The mini PC 600 includes a transmission unit 631, an object location acquisition unit 632, and a storage unit 633. The plurality of stationary cameras 60 include several tens to several hundreds of stationary cameras 60, which are installed in a warehouse in accordance with the scale (area) of the warehouse. When the stationary cameras 60 have a frame rate of 15 to 30 frames per second (fps), preferably, the ceiling image capturing device 900 includes up to four stationary cameras 60 to be connected to each mini PC (i.e., the mini PC 600) to avoid frame loss in a moving image.

The captured moving images Mv obtained by the stationary cameras 60 are stored in the storage unit 633. When the information processing apparatus 50a executes a tracking process, the ceiling image capturing device 900 sequentially transfers desired captured moving images Mv to the information processing apparatus 50a via the network 400.

A terminal 800 is an information processing terminal such as a PC, a tablet, or a smartphone. The terminal 800 causes not only a display of the information processing apparatus 50a but also a display of the terminal 800 to display the location of the object 30 to allow the user to check the movement of the object 30 or track the object 30. A worker of the forklift 10 or a worker in the warehouse operates a tablet or a smartphone to acquire, for example, location information of the object 30.

The information processing apparatus 50a1 is different from the information processing apparatus 50 according to the first embodiment in not including the object location acquisition unit 52. The information processing apparatus 50a1 is also different from the information processing apparatus 50 according to the first embodiment in that the storage unit 70 does not store the captured moving images Mv.

### Second Example

The information processing system 1b according to the second example illustrated in FIG. 26 is different from the information processing system 1a according to the first example illustrated in FIG. 25 in including more single-board computers 500, more ceiling image capturing devices 900, more readers 700, and more terminals 800 in accordance with the size of the warehouse 100. The single-board computers 500 are each mounted on a corresponding one of forklifts 10a to 10x. The functions of the information processing apparatus 50a1, the single-board computers 500, the ceiling image capturing devices 900, the readers 700, and the terminals 800 are substantially the same as the functions of those of the information processing system 1a illustrated in FIG. 25, respectively.

### Third Example

The information processing system 1c according to the third example illustrated in FIG. 27 is different from the information processing system 1a according to the first example illustrated in FIG. 25 in that a plurality of functional components distributed in the information processing apparatus 50a, the single-board computer 500, and the mini PC 600 of the information processing system 1a are collectively included in an information processing apparatus 50c. The information processing system 1c is suitable for the warehouse 100 whose size is small. In the information processing system 1c, when the stationary cameras 60 have a frame rate of 15 to 30 fps, preferably, two to four stationary cameras 60 are connected to the information processing apparatus 50c to avoid frame loss in a moving image.

### Fourth Example

The information processing system 1d according to the fourth example illustrated in FIG. 28 is different from the information processing system 1b according to the second example illustrated in FIG. 26 in that the information processing apparatus 50a is implemented as a cloud server 50d.

### Other Preferred Embodiments

The stationary cameras 60 mounted on the ceiling may be so-called spherical cameras each configured to capture an image of a 360-degree omnidirectional view. The stationary cameras 60 serving as spherical cameras cover a wider imaging range than ordinary cameras. This configuration reduces the number of stationary cameras 60 to be used.

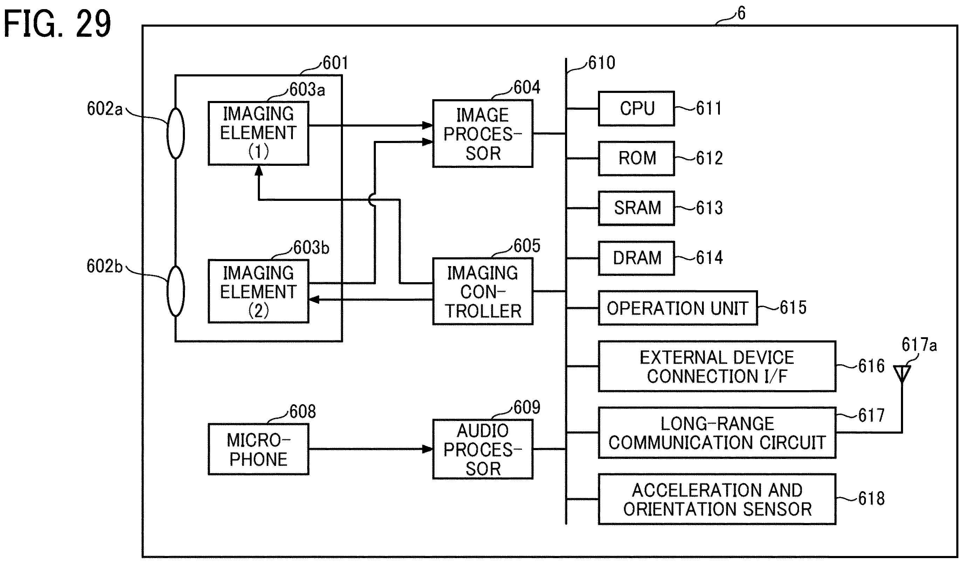

The hardware configuration of a spherical image capturing device 6 according to the present embodiment will be described with reference to FIG. 29. FIG. 29 is a block diagram illustrating a hardware configuration of the spherical image capturing device 6. In the following description, the spherical image capturing device 6 is a spherical (omnidirectional) image capturing device including two imaging elements, but may include any number of imaging elements greater than or equal to two. In one example, the spherical image capturing device 6 is not a device dedicated to omnidirectional image capturing. An external omnidirectional image capturing unit may be attached to a general-purpose digital camera or a smartphone to implement substantially the same functions as those of the spherical image capturing device 6.

As illustrated in FIG. 29, the spherical image capturing device 6 includes an imaging unit 601, an image processor 604, an imaging controller 605, a microphone 608, an audio processor 609, a CPU 611, a ROM 612, a static random access memory (SRAM) 613, a dynamic random access memory (DRAM) 614, an operation unit 615, an external device connection I/F 616, a long-range communication circuit 617, an antenna 617a, an acceleration and orientation sensor 618, a gyro sensor, an acceleration sensor, and a micro-USB concave terminal.

The imaging unit 601 includes fish-eye lenses 602a and 602b each having an angle of view of 180 degrees or more to form a hemispherical image. The imaging unit 601 further includes two imaging elements 603a and 603b corresponding to the fish-eye lenses 602a and 602b, respectively. Each of the imaging elements 603a and 603b includes an image sensor such as a complementary metal oxide semiconductor (CMOS) sensor or a charge-coupled device (CCD) sensor, a timing generation circuit, and a group of registers. The image sensor converts an optical image formed by the fish-eye lens 602a or 602b into an electric signal and outputs image data. The timing generation circuit generates, for example, horizontal or vertical synchronization signals and pixel clocks for the image sensor. In the group of registers, various data such as commands and parameters for an operation of the imaging element 603a or 603b are set.

Each of the imaging elements 603a and 603b of the imaging unit 601 is connected to the image processor 604 via a parallel I/F bus. Each of the imaging elements 603a and 603b of the imaging unit 601 is also connected to the imaging controller 605 through a serial I/F bus such as an inter-integrated circuit (I2C) bus. The image processor 604, the imaging controller 605, and the audio processor 609 are connected to the CPU 611 via a bus 610. The ROM 612, the SRAM 613, the DRAM 614, the operation unit 615, the external device connection I/F 616, the long-range communication circuit 617, and the acceleration and orientation sensor 618 are also connected to the bus 610.

The image processor 604 acquires respective items of image data output from the imaging elements 603a and 603b via the parallel I/F buses and performs predetermined processing on the items of image data. Thereafter, the image processor 604 combines the items of image data to generate data of an equirectangular projection image.

The imaging controller 605 usually functions as a master device while each of the imaging elements 603a and 603b usually functions as a slave device. The imaging controller 605 sets commands and the like in the group of registers of each of the imaging elements 603a and 603b via the I2C bus. The imaging controller 605 receives various commands from the CPU 611. The imaging controller 605 further acquires status data and the like of the group of registers of each of the imaging elements 603a and 603b via the I2C bus. The imaging controller 605 sends the acquired status data and the like to the CPU 611.

The imaging controller 605 instructs the imaging elements 603a and 603b to output the image data at the time when a shutter button of the operation unit 615 is pressed. In one example, the spherical image capturing device 6 has a function of displaying a preview image on a display (e.g., a display of a smartphone) or a function of displaying a moving image. In the case of displaying a moving image, image data is continuously output from the imaging elements 603a and 603b at a predetermined frame rate (expressed in frames per minute).

As described below, the imaging controller 605 operates in cooperation with the CPU 611 to synchronize the time at which the imaging element 603a outputs image data with the time at which the imaging element 603b outputs the image data. In the present embodiment, the spherical image capturing device 6 does not include a display. In another embodiment, the spherical image capturing device 6 may include a display.

The microphone 608 converts sound into audio (signal) data. The audio processor 609 acquires the audio data output from the microphone 608 via an I/F bus and performs predetermined processing on the audio data.

The CPU 611 controls the overall operation of the spherical image capturing device 6 and performs predetermined processing. The ROM 612 stores various programs to be executed by the CPU 611. Each of the SRAM 613 and the DRAM 614 operates as a work memory to store programs to be executed by the CPU 611 or data being processed. More specifically, in one example, the DRAM 614 stores image data being processed by the image processor 604 and data of the equirectangular projection image on which processing has been performed.

The operation unit 615 collectively refers to various operation buttons such as a shutter button. The user operates the operation unit 615 to input various image capturing modes or image capturing conditions.

The external device connection I/F 616 is an interface for connecting the spherical image capturing device 6 to various external devices. Examples of the external devices include, but are not limited to, a USB memory. The data of the equirectangular projection image, which is stored in the DRAM 614, is stored in an external medium via the external device connection I/F 616 or transmitted to an external communication terminal (apparatus) such as a smartphone via the external device connection I/F 616, as appropriate.

The long-range communication circuit 617 communicates with the external terminal (apparatus) such as a smartphone via the antenna 617a of the spherical image capturing device 6 by using short-range wireless communication technology such as Wireless Fidelity (WI-FI), near field communication (NFC), or Bluetooth^{®}. In one embodiment, the long-range communication circuit 617 also transmits the data of the equirectangular projection image to an external terminal (apparatus) such as a smartphone.

The acceleration and orientation sensor 618 calculates an orientation of the spherical image capturing device 6 from the Earth's magnetism and outputs orientation information. The orientation information is an example of related information (metadata) described in compliance with Exif. This information is used for image processing such as image correction of captured images. The related information also includes data of a date and time when the image is captured, and data of a data size of image data. The acceleration and orientation sensor 618 detects a change in tilt (roll, pitch, and yaw) of the spherical image capturing device 6 with movement of the spherical image capturing device 6. The change in tilt is one example of related information (metadata) described in compliance with Exif. This information is used for image processing such as image correction of captured images. The acceleration and orientation sensor 618 further detects acceleration in triaxial direction. The spherical image capturing device 6 calculates its position (an angle with respect to the direction of gravity), based on the acceleration detected by the acceleration and orientation sensor 618. The acceleration and orientation sensor 618 of the spherical image capturing device 6 improves the accuracy of image correction.

### Positional Relationship between Spherical Camera and Object

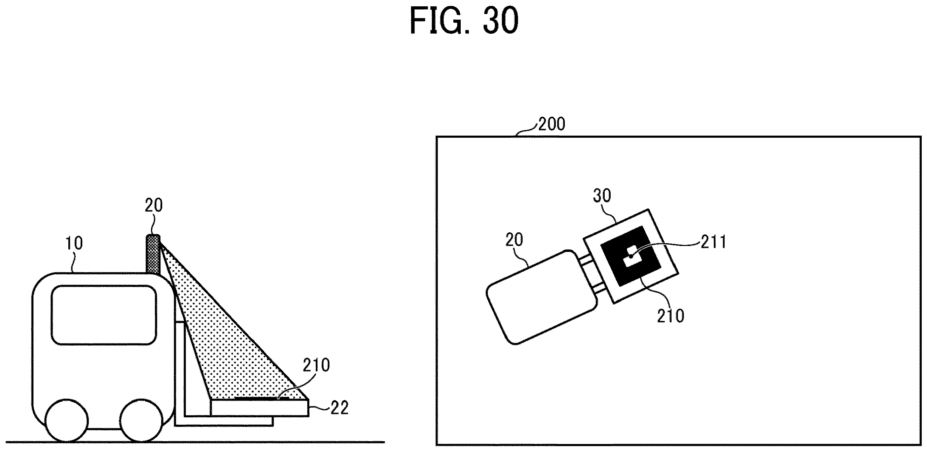

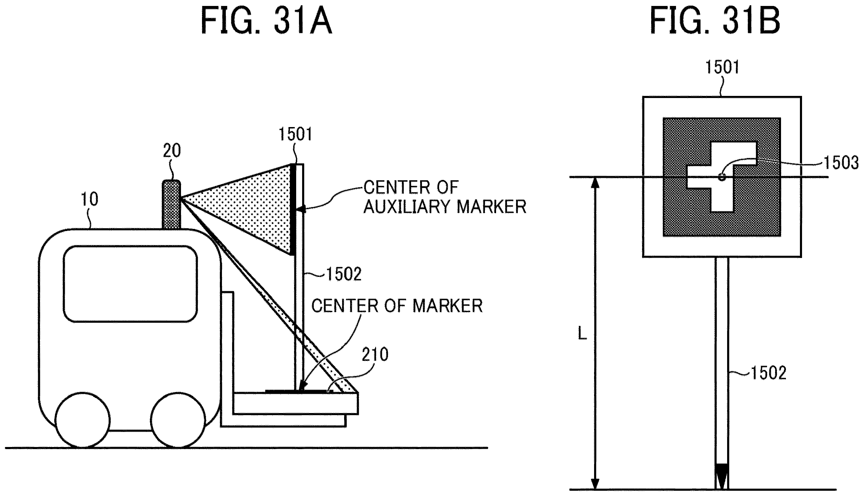

As described above, the object location acquisition unit 52 (522) calculates three-dimensional location information of the object 30 from three-dimensional location information of the spherical camera 20, which is calculated using, for example, visual simultaneous localization and mapping (VSLAM) technology, and a pre-acquired relative position between the spherical camera 20 and the object 30 (the relative position of the object 30 held by the forklift 10 with respect to the forklift 10). Accordingly, the object location acquisition unit 52 (522) calculates the three-dimensional location information of the object 30 by acquiring the relative position between the spherical camera 20 and the object 30 in advance. A method for acquiring the relative position between the spherical camera 20 and the object 30 will be described with reference to FIGS. 30, 31A, and 31B. FIG. 30 illustrates a first example of the method for acquiring the relative position between the spherical camera 20 and the object 30. FIGS. 31A and 31B illustrate a second example of the method for acquiring the relative position between the spherical camera 20 and the object 30. FIG. 31A is a side view of the forklift 10, and FIG. 31B is a view of an auxiliary marker 1501 supported by the forklift 10, as viewed from the spherical camera 20.

As a preferred example, for example, as illustrated in FIG. 30, the object location acquisition unit 52 (522) calculates the relative position between the spherical camera 20 and the object 30 from a captured image of a marker 210 on the object 30. The captured image is obtained by the spherical camera 20. For example, the object location acquisition unit 52 (522) acquires the coordinates of the outer diameter of the marker 210 in a captured image of the marker 210. The marker 210 is disposed on the object 30. The captured image is obtained by the spherical camera 20. Further, the object location acquisition unit 52 (522) calculates a central position 211 of the marker 210 in the camera coordinate system of the spherical camera 20 from the acquired coordinates of the outer diameter of the marker 210 and the actual dimensions of the marker 210.

If it is difficult to capture an image of the marker 210 on the object 30 from the location of the spherical camera 20, in one embodiment, the object location acquisition unit 52 (522) uses the auxiliary marker 1501 to calculate the central position 211 of the marker 210 in the camera coordinate system of the spherical camera 20.

For example, as illustrated in FIG. 31B, the auxiliary marker 1501 is an augmented reality (AR) marker secured to an upper portion of a rod 1502. A length L from a center 1503 of the auxiliary marker 1501 to a lower end of the rod 1502 is measured in advance. As illustrated, for example, in FIG. 31A, the spherical camera 20 captures an image of the auxiliary marker 1501 with the lower end of the rod 1502 in contact with a center of the marker 210 such that the entire auxiliary marker 1501 is included in the imaging range of the spherical camera 20.

The object location acquisition unit 52 (522) determines, from the captured image, a three-dimensional vector indicating the center 1503 of the auxiliary marker 1501 and the marker vertical and horizontal directions on the plane of the auxiliary marker 1501 in a three-dimensional coordinate system based on the spherical camera 20. Further, the object location acquisition unit 52 (522) can calculate, as the location of the center of the marker 210, a point moved downward from the location of the center 1503 of the auxiliary marker 1501 by an amount corresponding to the length L of the rod 1502 measured in advance.

Accordingly, it is possible to acquire accurate location information of an object before the movement of the object starts. Thus, it is less likely to affect the tracking of the moved object using image processing. The above-described locating method using a marker or an auxiliary marker can be used for each calculation of the location of a cargo carried by the forklift vehicle in actual work, but is effective, in particular, for the initial setting of the positional relationship between a camera and the object in a case where calibration (initial setting and calibration for installation of the camera) is involved.

The above-described locating method using a marker or an auxiliary marker is also available to acquire, in advance, the relative positions of a camera (such as the spherical camera 20) and an object (such as the object 30) to be imaged by the camera regardless of the configurations according to the embodiments of the present disclosure.

While some embodiments have been described, embodiments of the present disclosure are not limited to the above-described embodiments specifically disclosed herein, and various modifications and changes may be made without departing from the scope of the appended claims. Any one of the above-described operations may be performed in various other ways, for example, in an order different from the one described above.

One non-limiting example of a mobile device is a forklift. Other non-limiting examples of the mobile device include an unmanned guided vehicle and a drone.

All of the numerals such as ordinal numbers and quantities used in the description of the embodiments are presented as examples to specifically describe the technique disclosed herein, and the present disclosure is not limited to the presented numerals. Further, the connection relationship between the components is presented as an example to specifically describe the technique disclosed herein, and the connection relationship for implementing the functions disclosed herein is not limited to that described above.

Further, the division of blocks in the functional block diagrams is an example, and a plurality of blocks may be implemented as one block, one block may be divided into a plurality of blocks, or some functions may be transferred to another block. In addition, the functions of a plurality of blocks having similar functions may be processed by a single piece of hardware or software in parallel or in a time-division manner. Some or all of the functions may be distributed to a plurality of computers.

Each of the functions in the embodiments described above may be implemented by one or more processing circuits or circuitry. The term "processing circuit" or "processing circuitry", as used herein, includes a processor programmed to implement each function by software, such as a processor implemented by an electronic circuit, and devices designed to implement the functions described above, such as an application specific integrated circuit (ASIC), a digital signal processor (DSP), a field programmable gate array (FPGA), and existing circuit modules.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The present disclosure has, for example, the following aspects.

In a first aspect, an information processing method is performed by an information processing apparatus that acquires location information of an object to be tracked, based on a captured moving image of surroundings of the object. The information processing method includes acquiring location information of the object, based on location management information, the location management information being information in which identification information of the object, location information of the object, and time information indicating a time at which the location information of the object is acquired are associated with each other; acquiring time information indicating a time before movement of the object starts, based on the location management information; tracking the object in a moving image that is part of the captured moving image, by image processing, from the location information of the object, the moving image starting from a moving image time corresponding to the time information; and acquiring current location information of the object at an end of the movement of the object, based on a result of tracking the object.

In a second aspect, an information processing method is performed by an information processing apparatus that acquires location information of an object to be tracked, based on a captured moving image of surroundings of the object. The information processing method includes acquiring location information of the object before movement of the object starts, based on location management information, the location management information being information in which identification information of the object, location information of the object, first time information indicating a time before the movement of the object starts, and second time information indicating a time at which the movement of the object ends are associated with each other; acquiring the first time information, based on the location management information; tracking the object in a moving image that is part of the captured moving image, by image processing, from the location information of the object, the moving image starting from a moving image time corresponding to the first time information; and acquiring current location information of the object at an end of the movement of the object, based on a result of tracking the object.

According to a third aspect, the information processing method of the second aspect further includes acquiring the second time information, based on the location management information; tracking the object in a moving image that is part of the captured moving image, by image processing, from the location information of the object, the moving image being a moving image from the moving image time corresponding to the first time information to a moving image time corresponding to the second time information; and acquiring current location information of the object at an end of the movement of the object, based on a result of tracking the object.

According to a fourth aspect, in the information processing method of the second aspect or the third aspect, the information processing apparatus updates, in an update unit, the location management information based on the current location information of the object.

According to a fifth aspect, in the information processing method of any one of the first to third aspects, the captured moving image includes a plurality of captured moving images captured by a plurality of image capturing devices whose relative positions with respect to each other are determined in advance, the plurality of captured moving images including a first moving image and a second moving image, the information processing apparatus acquires the location information of the object, based on the plurality of captured moving images, and the information processing apparatus identifies, in a identifying unit, the second moving image to track the object in a case where the first moving image does not include the object after the object is moved, the second moving image including the object after the object is moved.

According to a sixth aspect, in the information processing method of any one of the first to fifth aspects, the information processing apparatus calculates location information of the object before the movement of the object starts, based on a relative position between an image capturing device that captures an image of the surroundings of the object and a location of a marker on the object.

In a seventh aspect, a program causes an information processing apparatus that acquires location information of an object to be tracked, based on a captured moving image of surroundings of the object. The program includes acquiring location information of the object before movement of the object starts, based on location management information, the location management information being information in which identification information of the object, location information of the object, and time information indicating a time at which the location information of the object is acquired are associated with each other; acquiring time information indicating a time before the movement of the object starts, based on the location management information; tracking the object in a moving image that is part of the captured moving image, by image processing, from the location information of the object, the moving image starting from a moving image time corresponding to the time information; and acquiring current location information of the object at an end of the movement of the object, based on a result of tracking the object.

In an eighth aspect, an information processing apparatus for acquiring location information of an object to be tracked, based on a captured moving image of surroundings of the object includes a movement start position acquisition unit, a time acquisition unit, a tracking unit, and a current location acquisition unit. The movement start position acquisition unit acquires location information of the object before movement of the object starts, based on location management information. The location management information is information in which identification information of the object, location information of the object, and time information indicating a time at which the location information of the object is acquired are associated with each other. The time acquisition unit acquires time information indicating a time before the movement of the object starts, based on the location management information. The tracking unit tracks the object in a moving image that is part of the captured moving image, by image processing, from the location information of the object, the moving image starting from a moving image time corresponding to the time information. The current location acquisition unit acquires current location information of the object at an end of the movement of the object, based on a result of tracking the object by the tracking unit.

In a ninth aspect, an information processing system for acquiring location information of an object to be tracked, based on a captured moving image of surroundings of the object includes a plurality of information processing apparatuses communicably connected to each other. The information processing system includes a movement start position acquisition unit, a time acquisition unit, a tracking unit, and a current location acquisition unit. The movement start position acquisition unit acquires location information of the object before movement of the object starts, based on location management information. The location management information is information in which identification information of the object, location information of the object, and time information indicating a time at which the location information of the object is acquired are associated with each other. The time acquisition unit acquires time information indicating a time before the movement of the object starts, based on the location management information. The tracking unit tracks the object in a moving image that is part of the captured moving image, by image processing, from the location information of the object, the moving image starting from a moving image time corresponding to the time information. The current location acquisition unit acquires current location information of the object at an end of the movement of the object, based on a result of tracking the object by the tracking unit.

## Claims

1. An information processing method for acquiring location information of an object to be tracked based on a captured moving image of surroundings of the object, performed by an information processing apparatus, the method comprising:
acquiring (S21) the location information of the object based on location management information in which identification information of the object, the location information of the object, and time information indicating a time at which the location information of the object is acquired are associated with each other;
acquiring (S22) the time information associated with the acquired location information of the object as time information indicating a time before movement of the object starts, based on the location management information;
tracking (S23), by image processing, the object in the captured moving image based on the location information of the object, wherein the tracking (S23) includes tracking the object in a part of the captured moving image starting from a moving image time corresponding to the acquired time information; and
acquiring (S25) current location information of the object indicating a location of the object at an end of the movement based on a result of the tracking.

2. An information processing method for acquiring location information of an object to be tracked based on a captured moving image of surroundings of the object, performed by an information processing apparatus, the method comprising:
acquiring (S31) location information indicating a pre-movement position where the object has been located before movement of the object starts, based on location management information in which identification information of the object, location information of the object, first time information indicating a time before the movement of the object starts, and second time information indicating a time at which the movement of the object ends are associated with each other;
acquiring (S32) the first time information based on the location management information;
tracking (S34), by image processing, the object in the captured moving image based on the location information of the object, wherein the tracking (S34) includes tracking the object in a part of the captured moving image starting from a moving image time corresponding to the first time information; and
acquiring (S35) current location information of the object indicating a location of the object at an end of the movement of the object based on a result of the tracking.

3. The information processing method according to claim 2, further comprising:
acquiring (S33) the second time information based on the location management information;
tracking (S34), by image processing, the object in a partial moving image based on the location information of the object, the partial moving image from the moving image time corresponding to the first time information to another moving image time corresponding to the second time information in the captured moving image; and
acquiring (S3 5) current location information of the object indicating a location of the object at an end of the movement based on a result of the tracking.

4. The information processing method according to claim 2 or 3, further comprising updating (S26) the location management information based on the current location information of the object.

5. The information processing method according to any one of claims 1 to 3, wherein
the captured moving image includes a plurality of captured moving images captured by a plurality of image capturing devices whose relative positions with each other are determined in advance, and
the information processing method further comprises, in a case where a first moving image of the plurality of captured moving images does not include the object after the object is moved, identifying (S44) a second moving image among the plurality of captured moving images to track the object, the second moving image including the object after the object is moved.

6. The information processing method according to any one of claims 1 to 5, further comprising
calculating location information of the object before the movement of the object starts, based on a relative position between an image capturing device that generates the captured moving image of the surroundings of the object and a location of a marker on the obj ect.

7. A carrier medium carrying computer readable codes which, when executed by a computer system, cause the computer system to carry out the method according to claim 1 or 2.

8. An information processing apparatus for acquiring location information of an object to be tracked, based on a captured moving image of surroundings of the object, the information processing apparatus comprising:
a movement start position acquisition unit (54) configured to acquire location information indicating a pre-movement position where the object has been located before movement of the object starts, based on location management information in which identification information of the object, the location information of the object, and time information indicating a time at which the location information of the object is acquired are associated with each other;
a time acquisition unit (53) configured to acquire time information associated with the acquired location information of the object as time information indicating a time before the movement of the object starts, based on the location management information;
a tracking unit (55) configured to track, by image processing, the object in the captured moving image based on the location information of the object, wherein the tracking unit (55) is configured to track the object in a part of the captured moving image starting from a moving image time corresponding to the acquired time information; and
a current location acquisition unit (56) configured to acquire current location information indicating a location of the object at an end of the movement based on a result of the tracking the object by the tracking unit (55).
